# EUROPEAN PATENT APPLICATION

(11) **EP 4 353 482 A1**
(43) Date of publication of application: **17.04.2024**
(21) Application number: 22819930.3
(22) Date of filing: 31.03.2022
(51) Int. Cl.: B41J 2/01, C09D 11/322, B41M 5/00

(54) **NONAQUEOUS INK COMPOSITION, INK SET, RECORDED MATTER, RECORDING METHOD, AND METHOD FOR PRODUCING RECORDED MATTER**

(30) Priority: 09.06.2021 JP 2021096437; 09.06.2021 JP 2021096438
(71) Applicant: DNP Fine Chemicals Co., Ltd., Yokohama-shi, Kanagawa 226-0022 (JP)
(72) Inventor: ORIKASA Yuka, Yokohama-shi, Kanagawa 226-0022 (JP); YOSHIMORI Keishiro, Yokohama-shi, Kanagawa 226-0022 (JP); YAMAZAKI Fumie, Yokohama-shi, Kanagawa 226-0022 (JP); MATSUMOTO Kisei, Yokohama-shi, Kanagawa 226-0022 (JP); UTAKA Koujun, Yokohama-shi, Kanagawa 226-0022 (JP); TAMURA Mitsuyoshi, Yokohama-shi, Kanagawa 226-0022 (JP)
(74) Representative: Hasegawa, Kan
(86) International application number: PCT/JP2022/016601
(87) International publication number: WO 2022/259742

(57) **Abstract**

Provided is a nonaqueous ink composition with which high recovery from cleaning and surface drying on a substrate can both be achieved even if the nonaqueous ink composition contains a white pigment or a bright pigment. This nonaqueous ink composition contains a coloring material and an organic solvent and is to be ejected by means of an inkjet method, wherein the coloring material contains a white pigment or a bright pigment, and the organic solvent contains the organic solvent A below. Organic solvent A: at least one substance selected from the group consisting of alkylamide-based solvents (a1) and cyclic amide-based solvents (a2).

## Description

### TECHNICAL FIELD

The present invention relates to a nonaqueous ink composition, an ink set, a recorded matter, a recording method, and a method for producing a recorded matter.

### BACKGROUND ART

As an ink composition, a nonaqueous ink composition obtained by dissolving or dispersing various colorants in a mixed liquid of organic solvents is widely used. This ink composition is coated and adhered directly or via another layer to a base material such as a piece of paper by an inkjet method or the like, and the nonaqueous ink composition is dried, thereby obtaining a letter or an image.

Among these, for example, a nonaqueous ink composition containing a white pigment may be ejected onto a transparent base material or the like by an inkjet method, and then a colored ink may be ejected by an inkjet method. Such a nonaqueous ink composition containing a white pigment is required to have a concealing property in addition to ejection stability.

For example, Patent Document 1 describes a nonaqueous ink composition containing a white pigment having a predetermined particle diameter and a glycol ether-based solvent. Patent Document 1 discloses that this nonaqueous ink composition has excellent ejection stability and can provide a recorded matter having an excellent concealing property.

In addition, there is also an ink composition (sometimes referred to as metallic ink) capable of expressing an image having a metallic hue on a base material (recording medium) or an imaging subject such as a printed matter having a colored layer laminated on a part or an entire surface thereof. For example, Patent Document 2 describes an ink composition containing a luster pigment and a predetermined alkoxyamide-based solvent. Patent Document 2 discloses that this ink composition provides a recorded matter having excellent rub resistance for a metallic luster image.

### Citation List

### Patent Document

Patent Document 1: Japanese Patent No. 6617410
Patent Document 2: Japanese Unexamined Patent Application, Publication No. 2012-207119

### DISCLOSURE OF THE INVENTION

### Problems to be Solved by the Invention

Meanwhile, the white pigment contains, for example, a metal compound such as titanium oxide. A density of such a metal compound is larger than that of a general colorant contained in other ink compositions. As a result, a solid component such as the pigment contained in the nonaqueous ink composition may cause clogging in a nozzle of an inkjet head.

An Inkjet recording device that inkjet-ejects a nonaqueous ink composition has a cleaning recovery function for eliminating such clogging in the nozzle of the inkjet head, but the nonaqueous ink composition containing the white pigment tends to cause the clogging in the nozzle of the inkjet head, and a cleaning recovery property for eliminating such clogging in the nozzle has sometimes been decreased. Note that in this description, eliminating the clogging in the nozzle by the cleaning recovery function provided in the inkjet recording device is sometimes simply referred to as a cleaning recovery property.

Especially, the nonaqueous ink composition containing the white pigment is required to have a concealing property, as described above. For this reason, for example, in order to provide a recorded matter having an excellent concealing property, when an ejection amount of the nonaqueous ink composition increases, the amount of the nonaqueous ink composition on the base material also increases, and therefore it will take time to dry.

In order to improve a surface drying property of the nonaqueous ink composition on the base material, it is common to contain a solvent having high volatility. However, the solvent having high volatility is generally dried within the inkjet head, and therefore, the nozzle of the inkjet head is likely to become clogged, resulting in a significant problem of a decreased cleaning recovery property.

In addition, the luster pigment contains, for example, a metal powder or a metal compound. Therefore, a density thereof is larger than those of other colorants contained in the ink composition. As a result, a solid component such as the pigment contained in the nonaqueous ink composition may cause clogging in a nozzle of an inkjet head.

An inkjet recording device that inkjet-ejects a nonaqueous ink composition has a cleaning recovery function for eliminating such clogging in the nozzle of the inkjet head, but the nonaqueous ink composition containing the luster pigment tends to cause the clogging in the nozzle of the inkjet head, and a cleaning recovery property for eliminating such clogging in the nozzle has sometimes been decreased.

Especially, in order to provide a recorded matter having excellent glossiness using the nonaqueous ink composition containing the luster pigment, when an ejection amount of the nonaqueous ink composition increases, the amount of the nonaqueous ink composition on the base material also increases, and therefore it will take time to dry.

In order to improve the surface drying property of the nonaqueous ink composition on the base material, it is common to contain a solvent having high volatility. However, the solvent having high volatility is generally dried within the inkjet head, and therefore, the nozzle of the inkjet head is likely to become clogged, resulting in a significant problem of a decreased cleaning recovery property.

An object of the present invention is to provide a nonaqueous ink composition that can achieve both a high cleaning recovery property and a high surface drying property on a base material, even when the nonaqueous ink composition contains a white pigment.

Another object of the present invention is to provide a nonaqueous ink composition that can achieve both a high cleaning recovery property and a high surface drying property on a base material, even when the nonaqueous ink composition contains a luster pigment.

### Means for Solving the Problems

In order to solve the above-mentioned problems, the present inventors have conducted diligent studies and found that the above-mentioned problems can be solved by containing a predetermined organic solvent, and thus the present invention has been completed. Specifically, provided are the following.

(1) A nonaqueous ink composition to be ejected by an inkjet method, the nonaqueous ink composition containing: a colorant; and an organic solvent, the colorant containing a white pigment, the organic solvent containing the following organic solvent A:
   organic solvent A: at least one selected from the group consisting of an alkylamide-based solvent (a1) and a cyclic amide-based solvent (a2).
(2) The nonaqueous ink composition as described in aspect (1), in which the white pigment contains an inorganic oxide.
(3) The nonaqueous ink composition as described in aspect (2), in which the white pigment contains titanium oxide.
(4) The nonaqueous ink composition as described in any one of aspects (1) to (3), in which a content of the white pigment is 8 mass% or more and 20 mass% or less in a total amount of the nonaqueous ink composition.
(5) The nonaqueous ink composition as described in any one of aspects (1) to (4), further containing: a surfactant, in which the surfactant includes a surfactant having a siloxane skeleton, and a content of the surfactant having a siloxane skeleton is 0.01 mass% or more and 1.0 mass% or less.
(6) The nonaqueous ink composition as described in any one of aspects (1) to (5), which is used to form an under layer or an upper layer made of at least one selected from the group consisting of a black ink composition, a colored ink composition, a luster ink composition, and a clear ink composition.
(7) A nonaqueous ink composition to be ejected by an inkjet method, the nonaqueous ink composition containing: a luster pigment and an organic solvent, the organic solvent containing the following organic solvent A:
   organic solvent A: at least one selected from the group consisting of an alkylamide-based solvent (a1) and a cyclic amide-based solvent (a2).
(8) The nonaqueous ink composition as described in aspect (7), in which the luster pigment includes a metal-containing luster pigment.
(9) The nonaqueous ink composition as described in aspect (8), in which the metal-containing luster pigment contains at least one selected from the group consisting of aluminum, an aluminum alloy, indium, an indium alloy, nickel, and a nickel alloy.
(10) The nonaqueous ink composition as described in aspect (9), in which the metal-containing luster pigment contains at least aluminum or the aluminum alloy.
(11) The nonaqueous ink composition as described in any one of aspects (8) to (10), in which a volume-based cumulative 50% particle diameter (D50) of the metal-containing luster pigment is 0.01 um or more and 5.0 um or less, and a volume-based cumulative 90% particle diameter (D90) of the metal-containing luster pigment is 10.0 um or less.
(12) The nonaqueous ink composition as described in any one of aspects (8) to (11), in which the metal-containing luster pigment is a particle having a flat surface.
(13) The nonaqueous ink composition as described in aspect (12), in which the metal-containing luster pigment includes a metal-containing luster pigment having a flat plate shape or a scale shape.
(14) The nonaqueous ink composition as described in aspect (13), in which a thickness of the metal-containing luster pigment having a flat plate shape or a scale shape is in a range of 5 nm or more and 5.0 um or less.
(15) The nonaqueous ink composition as described in any one of aspects (7) to (14), in which the organic solvent further contains an acetate-based solvent represented by the following formula (2-3): 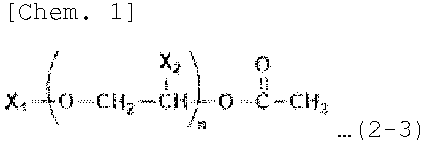
   in the formula (2-3), X₁ is an alkyl group, X₂ is hydrogen or an alkyl group, and
   n represents an integer of 1 or more and 4 or less.
(16) The nonaqueous ink composition as described in any one of aspects (7) to (15), which is used to form an under layer or an upper layer made of at least one selected from the group consisting of a black ink composition, a colored ink composition, a luster ink composition, and a clear ink composition.
(17) The nonaqueous ink composition as described in any one of aspects (1) to (16), in which a content of the organic solvent A is 1.0 mass% or more and 90.0 mass% or less in a total amount of the nonaqueous ink composition.
(18) The nonaqueous ink composition as described in any one of aspects (1) to (17), in which the organic solvent A contains the alkylamide-based solvent (a1).
(19) The nonaqueous ink composition as described in aspect (18), in which the alkylamide-based solvent is represented by the following general formula (1): 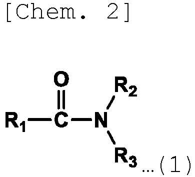 in the formula (1), R₁ represents hydrogen or an alkyl group having 1 or more and 4 or less carbon atoms, and R₂ and R₃ each independently represent hydrogen or an alkyl group having 1 or more and 4 or less carbon atoms.
(20) The nonaqueous ink composition as described in aspect (19), in which the alkylamide-based solvent includes at least one selected from the group consisting of N,N-diethylformamide, N,N-diethylpropanamide, and N,N-diethylacetamide.
(21) The nonaqueous ink composition as described in any one of aspects (1) to (17), in which the organic solvent A contains the cyclic amide-based solvent (a2).
(22) The nonaqueous ink composition as described in aspect (21), in which the cyclic amide-based solvent is represented by the following general formula (2): 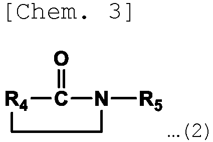 in the formula (2), R₄ represents an alkylene group having 3 or more and 5 or less carbon atoms, and R₅ represents hydrogen or an alkyl group or an unsaturated hydrocarbon group having 1 or more and 4 or less carbon atoms.
(23) The nonaqueous ink composition as described in aspect (22), in which the cyclic amide-based solvent includes at least one selected from the group consisting of ε-caprolactam, N-methyl-ε-caprolactam, and N-vinylcaprolactam.
(24) The nonaqueous ink composition as described in any one of aspects (1) to (23), in which the organic solvent further contains at least one selected from the group consisting of a glycol ether-based solvent, an acetate-based solvent, a cyclic ester, a carbonate ester, a dibasic acid ester, a lactic acid ester, an amide, and an alcohol.
(25) The nonaqueous ink composition as described in any one of aspects (1) to (24), in which the organic solvent contains the glycol ether-based solvent.
(26) The nonaqueous ink composition as described in aspect (25), in which the glycol ether-based solvent includes glycol ether dialkyl.
(27) The nonaqueous ink composition as described in aspect (25) or (26), in which the glycol ether-based solvent includes glycol ether monoalkyl.
(28) The nonaqueous ink composition as described in any one of aspects (25) to (27), in which the glycol ether-based solvent includes at least two solvents having different flash points.
(29) The nonaqueous ink composition as described in any one of aspects (1) to (28), further containing: a resin.
(30) The nonaqueous ink composition as described in aspect (29), in which a content of the resin is within the range of 0.1 mass% or more and 10.0 mass% or less in the total amount of the nonaqueous ink composition.
(31) The nonaqueous ink composition as described in aspect (29) or (30), in which the resin includes at least one or more selected from the group consisting of an acrylic resin, a vinyl chloride-based resin, a polyurethane-based resin, a polyester-based resin, and a cellulose-based resin.
(32) The nonaqueous ink composition as described in any one of aspects (29) to (31), in which the nonaqueous ink composition is a white ink composition containing a white pigment, and a content ratio of the resin with respect to a content of the white pigment is 0.20 or more and 1.00 or less.
(33) An ink set containing: the nonaqueous ink composition as described in any one of aspects (1) to (32).
(34) An ink set containing: the nonaqueous ink composition as described in any one of aspects (1) to (32), the nonaqueous ink composition being a white ink composition containing a white pigment,
   the nonaqueous ink composition and at least one or more selected from the group consisting of a black ink composition, a colored ink composition, a luster ink composition, and a clear ink composition are simultaneously ejected onto a surface of a base material by an inkjet method.
(35) An ink set comprising the nonaqueous ink composition as described in any one of aspects (1) to (32), the nonaqueous ink composition being a luster ink composition containing a luster pigment, the nonaqueous ink composition and at least one or more selected from the group consisting of a black ink composition, a colored ink composition, a white ink composition, and a clear ink composition are simultaneously ejected onto a surface of a base material by an inkjet method.
(36) A recorded matter including: a recording layer made of the nonaqueous ink composition as described in any one of aspects (1) to (32) formed on a surface of a base material.
(37) A recording method including: ejecting the nonaqueous ink composition as described in any one of aspects (1) to (32) onto a surface of a base material by an inkjet method.
(38) A method for producing a recorded matter, the method including: ejecting the nonaqueous ink composition as described in any one of aspects (1) to (32) onto a surface of a base material by an inkjet method.

### Effects of the Invention

The nonaqueous ink composition of the present invention can achieve both a high cleaning recovery property and a high surface drying property on a base material, even when the nonaqueous ink composition contains a white pigment.

The nonaqueous ink composition of the present invention can achieve both a high cleaning recovery property and a high surface drying property on a base material, even when the nonaqueous ink composition contains a luster pigment.

### PREFERRED MODE FOR CARRYING OUT THE INVENTION

Hereinafter, specific embodiments of the present invention will be described in detail, but the present invention is not limited to the following embodiments at all, and can be implemented with appropriate modifications within the scope of the purpose of the present invention. Further, in the present description, the expression "-" means "...or more" and "...or less".

### <<1. Summary>>

A nonaqueous ink composition according to one embodiment of the present invention is a nonaqueous ink composition to be ejected by an inkjet method, which contains a pigment, a pigment dispersant, and an organic solvent. Here, in the present description, the "nonaqueous ink composition" refers to an ink composition containing an organic solvent and produced without intentionally containing water, unlike an aqueous ink composition containing water as a main component.

In addition, the ink composition according to the present embodiment (including nonaqueous ink compositions according to the following first and second embodiments) is preferably an ink composition capable of providing a recorded matter by drying (volatilizing) an organic solvent. Specifically, according to such an ink composition, a volatile component such as an organic solvent contained in the ink composition is dried (volatilized), and a residue thereof is deposited on a surface of a base material to form a recorded matter. The ink composition is different from an active energy ray-curable ink composition which is polymerized and cured on a base material by irradiation with active energy rays such as ultraviolet rays. The active energy ray-curable ink composition contains a polymerizable compound as an essential component, but the ink composition capable of providing a recorded matter by drying (volatilizing) the organic solvent contains the organic solvent, and does not contain a polymerizable compound as an essential component, and may contain a polymerizable compound or may not contain a polymerizable compound.

This organic solvent is characterized by containing the following organic solvent A.

Organic solvent A: at least one selected from the group consisting of an alkylamide-based solvent (a1) and a cyclic amide-based solvent (a2).

Hereinafter, specific embodiments of the present invention will be described in detail.

### <<1-1. Nonaqueous Ink Composition of First Embodiment>>

A nonaqueous ink composition of a first embodiment according to the present embodiment is a nonaqueous ink composition to be ejected by an inkjet method, which contains a colorant containing a white pigment and an organic solvent.

This organic solvent is characterized by containing the following organic solvent A.

Organic solvent A: at least one selected from the group consisting of an alkylamide-based solvent (a1) and a cyclic amide-based solvent (a2).

Therefore, by containing the organic solvent A (at least one selected from the group consisting of the alkylamide-based solvent (a1) and the cyclic amide-based solvent (a2)), a nonaqueous ink composition containing a white pigment also can effectively eliminate clogging in a nozzle of an inkjet head and improve a cleaning recovery property of the nonaqueous ink composition.

In addition, according to opinions of the inventors, the organic solvent A has a high drying property on a surface of a base material, but has low volatility within a plastic supply body (for example, a plastic tube). Therefore, the nonaqueous ink composition containing the organic solvent A can provide a recorded matter having an excellent surface drying property while maintaining the cleaning recovery property. A reason why the organic solvent A has a high drying property on the surface of the base material and low volatility within a plastic supply body is that the organic solvent A has low permeability to a plastic, and a boiling point of the organic solvent itself and the volatility within the plastic supply body do not necessarily correlate.

Note that a moisture content in the nonaqueous ink composition according to the present embodiment is preferably 5.0 mass% or less, more preferably 1.0 mass% or less, and even more preferably 0.5 mass% or less in a total amount of the nonaqueous ink composition. When moisture derived from raw materials and moisture in the atmosphere is mixed during a producing process, storage stability and ejection stability of the nonaqueous ink composition may deteriorate, and a solid matter may be generated due to components contained in the nonaqueous ink composition. By reducing the moisture content in the nonaqueous ink composition to avoid containing moisture as much as possible (intentionally avoiding moisture), it is possible to more effectively improve the storage stability and the cleaning recovery property.

Hereinafter, each component contained in the nonaqueous ink composition according to the present embodiment will be described.

### [Organic Solvent]

An organic solvent can disperse or dissolve each component contained in the nonaqueous ink composition according to the present embodiment. The organic solvent contains the organic solvent A (at least one selected from the group consisting of an alkylamide-based solvent (a1) and a cyclic amide-based solvent (a2)).

### (1) Alkylamide-based Solvent

The alkylamide-based solvent is a solvent containing a compound composed of hydrogen or an alkyl group and a -C(=O)-N- group, which is a compound having an alkyl group (CₙH₂ₙ₊₁-) and a -C(=O)-N- group (amide bond). For example, an alkylamide-based solvent having the following structure can be preferably used. 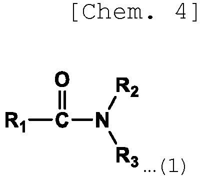 (In the formula (1), R₁ represents hydrogen or an alkyl group having 1 or more and 4 or less carbon atoms, and R₂ and R₃ each independently represent hydrogen or an alkyl group having 1 or more and 4 or less carbon atoms).

Note that each of R₂ and R₃ in the formula (1) is preferably an alkyl group having 1 or more and 4 or less carbon atoms, and more preferably an alkyl group having 2 or more and 4 or less carbon atoms.

Specific examples of the alkylamide-based solvent include N,N-diethylformamide, N,N-diethylacetamide, N,N-dipropylformamide, N,N-dibutylformamide, N,N-diethylpropanamide, N,N-dipropylpropanamide, N-ethylformamide, and N-ethylacetamide. Among these, from a viewpoint of particularly exhibiting the effects of the present invention, it is preferable to contain at least one selected from the group consisting of N,N-diethylformamide, N,N-diethylpropanamide, and N,N-diethylacetamide.

A content of the alkylamide-based solvent (a1) is not particularly limited, and a lower limit of the content of the alkylamide-based solvent (a1) is preferably in a range of 1 mass% or more, more preferably in a range of 5 mass% or more, and even more preferably in a range of 8 mass% or more in the total amount of the nonaqueous ink composition.

An upper limit of the content of the alkylamide-based solvent (a1) is preferably 90 mass% or less, more preferably 80 mass% or less, and even more preferably 75 mass% or less in the total amount of the nonaqueous ink composition.

### (2) Cyclic Amide-based Solvent

The cyclic amide-based solvent (a2) is a solvent having a cyclic structure and having a -C(=O)-N- group in the cyclic structure. For example, a cyclic amide-based solvent having the following structure can be preferably used. 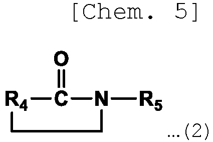 (In the formula (2), R₄ represents an alkylene group having 3 or more and 5 or less carbon atoms, and R₅ represents hydrogen or an alkyl group or an unsaturated hydrocarbon group having 1 or more and 4 or less carbon atoms).

The unsaturated hydrocarbon group refers to a hydrocarbon group containing at least one or more multiple bonds, such as a vinyl group.

Note that R₅ is preferably hydrogen or an alkyl group or an unsaturated hydrocarbon group having 1 or more and 3 or less carbon atoms, and is preferably hydrogen or an alkyl group or an unsaturated hydrocarbon group having 1 or more and 2 or less carbon atoms.

Specific examples of the cyclic amide-based solvent (a2) include N-methylcaprolactam, N-acetylcaprolactam, ε-caprolactam, N-vinylcaprolactam, 2-pyrrolidone, N-methyl-2-pyrrolidone, N-ethyl-2-pyrrolidone, N-propyl-2-pyrrolidone, N-ethyl-ε-caprolactam, N-propyl-ε-caprolactam, and N-methyl-ε-caprolactam. Among these, it is preferable to contain at least one selected from the group consisting of ε-caprolactam, N-methylcaprolactam, and N-vinylcaprolactam.

A content of the cyclic amide-based solvent (a2) is not particularly limited, and a lower limit of the content of the cyclic amide-based solvent (a2) is preferably in a range of 1 mass% or more, more preferably in a range of 5 mass% or more, and even more preferably in a range of 8 mass% or more in the total amount of the nonaqueous ink composition.

An upper limit of the content of the cyclic amide-based solvent (a2) is preferably 90 mass% or less, more preferably 80 mass% or less, and even more preferably 75 mass% or less in the total amount of the nonaqueous ink composition.

In the organic solvent A, " containing the alkylamide-based solvent (a1)" is more preferable. If "containing the alkylamide-based solvent (a1)", both the cleaning recovery property and the surface drying property on a base material are achieved, and good member suitability with an inkjet recording device is further achieved.

The organic solvent A sufficiently exhibits the effects of the present invention by containing at least one of the alkylamide-based solvent (a1) or the cyclic amide-based solvent (a2), but two or more kinds of the solvents of the organic solvent A may be mixed. By mixing two or more kinds of the solvents, a balance between the storage stability, the member suitability, the surface drying property, and the cleaning recovery property can be freely set. When two or more kinds of the solvents in the organic solvent A are mixed, a lower limit of a total content of the organic solvent A is preferably in a range of 1.0 mass% or more, more preferably in a range of 5.0 mass% or more, and even more preferably in a range of 10.0 mass% or more in the total amount of the nonaqueous ink composition. An upper limit of the total content of the organic solvent A is preferably 90.0 mass% or less in the total amount of the nonaqueous ink composition.

### (4) Other Organic Solvents

The nonaqueous ink composition according to the present embodiment may contain organic solvents other than the organic solvent A described above. Specific examples thereof include glycol ether dialkyl in which OH groups at both ends of glycol are alkyl-substituted, glycol ether monoalkyl in which one OH group of glycol is alkyl-substituted, a carbonate ester, and a cyclic ester.

Examples of the glycol ether-based solvent include glycol ether dialkyl in which OH groups at both ends of glycol are alkyl-substituted, and glycol ether monoalkyl in which one OH group of glycol is alkyl-substituted. Examples of the glycol ether-based solvent include those containing at least one of glycol ether dialkyl represented by the following formula (5) or glycol ether monoalkyl.

R₈-(-O-R₉)ₙ-O-R₁₀... (1-3)

(In the formula (1-3), R₈ and R₁₀ each independently represent hydrogen or an optionally branched alkyl group having 1 or more and 8 or less carbon atoms, and R₉ represents an optionally branched alkylene group having 1 or more and 4 or less carbon atoms.

n represents an integer of 1 or more and 6 or less).

Examples of the glycol ether-based solvent include: alkylene glycol monoalkyl ethers such as ethylene glycol mono-n-butyl ether, ethylene glycol mono-isobutyl ether, ethylene glycol mono-t-butyl ether, ethylene glycol mono-2-ethylhexyl ether, diethylene glycol monomethyl (or ethyl, propyl, isopropyl, n-butyl, isobutyl, t-butyl, and 2-ethylhexyl) ether, triethylene glycol monomethyl (or ethyl, propyl, isopropyl, n-butyl, isobutyl, t-butyl, and 2-ethylhexyl ether, tetraethylene glycol monomethyl ether, propylene glycol mono-n-butyl ether, propylene glycol mono-isobutyl ether, propylene glycol mono-t-butyl ether, propylene glycol mono-2-ethylhexyl ether, dipropylene glycol monomethyl (or ethyl, propyl, isopropyl, n-butyl, isobutyl, t-butyl, and 2-ethylhexyl) ether, tripropylene glycol monomethyl (or ethyl, propyl, isopropyl, n-butyl, isobutyl, and t-butyl) ether, tetrapropylene glycol monomethyl ether (or ethyl, propyl, isopropyl, n-butyl, isobutyl, t-butyl, and 2-ethylhexyl); and dialkyl ethers of polyhydric alcohols such as ethylene glycol dibutyl ether, ethylene glycol dipropyl ether, diethylene glycol dimethyl ether, diethylene glycol diethyl ether, diethylene glycol methyl ethyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethyl hexyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, dipropylene glycol methyl butyl ether, tripropylene glycol dimethyl ether, tripropylene glycol diethyl ether, and tripropylene glycol ethyl methyl ether.

Among these, preferred examples include diethylene glycol dimethyl ether, diethylene glycol diethyl ether, diethylene glycol monobutyl ether, diethylene glycol ethyl methyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, tripropylene glycol dimethyl ether, and tripropylene glycol ethyl methyl ether.

In addition, among these glycol ether-based solvents, two or more kinds of glycol ether-based solvents having different flash points are preferably combined. By containing a glycol ether-based solvent having a high flash point (for example, a flash point of 70°C or higher), a nonaqueous ink composition having a high cleaning recovery property is obtained. By containing a glycol ether-based solvent having a low flash point (for example, a flash point of less than 70°C), a nonaqueous ink composition having a high surface drying property on a base material is obtained. By containing a glycol ether-based solvent having a flash point of 70°C or higher and a glycol ether-based solvent having a flash point of lower than 70°C, a nonaqueous ink composition that is capable of achieving both the high cleaning recovery property and the high surface drying property on the base material and particularly effectively exhibits the effects of the present invention can be obtained.

In addition, solvents other than the glycol ether-based solvent may be contained. Specific examples thereof include: a cyclic ester such as γ-butyrolactone, δ-valerolactone, δ-hexanolactone, ε-caprolactone, γ-valerolactone, γ-hexalactone, γ-heptalactone, γ-octalactone, γ-nonalactone, γ-decalactone, γ-undecalactone, δ-heptalactone, δ-octalactone, δ-nonalactone, δ-decalactone, δ-undecalactone; a carbonate ester such as propylene carbonate and ethylene carbonate; an oxazolidinone-based solvent such as 3-methyl-2-oxazolidinone, 3-ethyl-2-oxazolidinone, and N-vinylmethyloxazolidinone; an acetate-based solvent such as triethylene glycol butyl ether acetate, ethylene glycol butyl ether acetate, diethylene glycol ethyl ether acetate, diethylene glycol methyl ether acetate, diethylene glycol butyl ether acetate, propylene glycol methyl ether acetate, dipropylene glycol methyl ether acetate, 1-methoxy-2-propyl acetate, 2-methyl butyl acetate, 3-methoxybutyl ether acetate, cyclohexyl acetate; an amide-based solvent different from the alkylamide-based solvent (a1) and the cyclic amide-based solvent (a2), such as 3-methoxypropanamide, 3-butoxypropanamide, N,N-dimethyl-3-methoxypropanamide, N,N-dibutyl-3-methoxypropanamide, N,N-dibutyl-3-butoxypropanamide, N,N-dimethyl-3-butoxypropanamide; alkyl alcohols having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol, n-pentanol; a monovalent alcohol solvent such as 3-methoxy-3-methyl-1-butanol, 3-methoxy-1-propanol, 1-methoxy-2-propanol, 3-methoxy-n-butanol; ketone alcohols or keto alcohols such as acetone, diacetone alcohol, methyl ethyl ketone, methyl-n-propyl ketone, methyl isopropyl ketone, methyl-n-butyl ketone, methyl isobutyl ketone, methyl-n-amyl ketone, methyl hexyl ketone, methyl isoamyl ketone, diethyl ketone, ethyl-n-propyl ketone, ethyl isopropyl ketone, ethyl-n-butyl ketone, ethyl isobutyl ketone, di-n-propyl ketone, diisobutyl ketone, cyclopentanone, cyclohexanone, methylcyclohexanone, isophorone, acetyl ketone; ethers such as tetrahydrofuran and dioxane; an oxyethylene or oxypropylene copolymer such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylolethane, trimethylolpropane, 1,2,6-hexanetriol; tetravalent alcohols such as meso-erythritol and pentaerythritol; alkanolamines such as monoethanolamine, diethanolamine, triethanolamine, N-methylethanolamine, N-ethylethanolamine, N-butylethanolamine, N-methyldiethanolamine, N-ethyldiethanolamine, and N-butyldiethanolamine; acetate esters such as methyl acetate, ethyl acetate, n-propyl acetate, isopropyl acetate, n-butyl acetate, isobutyl acetate, hexyl acetate, and octyl acetate; lactic acid esters such as methyl lactate, ethyl lactate, butyl lactate, propyl lactate, ethylhexyl lactate, amyl lactate, and isoamyl lactate; saturated hydrocarbons such as n-hexane, isohexane, n-nonane, isononane, dodecane, and isododecane; unsaturated hydrocarbons such as 1-hexene, 1-heptene, and 1-octene; cyclic unsaturated hydrocarbons such as cyclohexene, cycloheptene, cyclooctene, 1,1,3,5,7-cyclooctatetraene, and cyclododecene; aromatic hydrocarbons such as benzene, toluene, and xylene; morpholines such as N-methylmorpholine, N-ethylmorpholine, and N-formylmorpholine; a terpene-based solvent; dibasic acid esters such as dimethyl oxalate, diethyl oxalate, dimethyl malonate, diethyl malonate, dipropyl malonate, dimethyl succinate, diethyl succinate, dimethyl glutarate, and diethyl glutarate. Among these, it is preferable to contain at least one selected from the group consisting of a glycol ether-based solvent, an acetate-based solvent, a cyclic ester, a carbonate ester, a dibasic acid ester, a lactic acid ester, an amide, and an alcohol. It is preferable to select a solvent having an appropriate HLB value according to a resin, a dispersant, and the like to be combined.

A content of the other organic solvents is not particularly limited, and a lower limit of the content of the other organic solvents is preferably in a range of 10 mass% or more, more preferably in a range of 20 mass% or more, and even more preferably in a range of 30 mass% or more. An upper limit of the content of the other organic solvents is preferably in a range of 85 mass% or less, more preferably in a range of 80 mass% or less, and even more preferably in a range of 75 mass% or less.

### [Colorant]

The nonaqueous ink composition according to the present embodiment contains a colorant. The colorant contains a white pigment. The white pigment will be explained below.

### (White Pigment)

The white pigment is not particularly limited, examples thereof include C.I. Pigment White 6, 18, and 21, and a white inorganic pigment containing a metal compound such as titanic oxide, zinc oxide, silica, calcium carbonate, magnesium carbonate, zinc sulfide, precipitated barium sulfate, antimony oxide, and zirconium oxide, as well as a clay pigment and pearl pigment.

Among these, the white pigment preferably contains an inorganic oxide, and more preferably contains titanium oxide. With a nonaqueous ink composition containing an inorganic oxide (more preferably a nonaqueous ink composition containing titanium oxide), a recorded matter having an excellent concealing property can be provided. Especially, when a content of the white pigment is large, a recorded matter having a better concealing property can be obtained, but clogging tends to occur in a nozzle of an inkjet head, and the cleaning recovery property tends to be further decreased. However, by containing the organic solvent A (at least one selected from the group consisting of the alkylamide-based solvent (a1) and the cyclic amide-based solvent (a2)), a nonaqueous ink composition containing titanium oxide also can effectively eliminate clogging in a nozzle of an inkjet head and improve the cleaning recovery property of the nonaqueous ink composition.

A commercially available product also can be used as the titanium oxide, and examples of such a commercially available product include STR-100N (trade name, manufactured by Sakai Chemical Industry Co., Ltd., rutile type), TTO-51A, TTO-55A, TTO-80A, MPT-140, MPT-141 (trade name, ISHIHARA SANGYO KAISHA, LTD., rutile type), MKR-1 (trade name, Sakai Chemical Industry Co., Ltd., rutile type), KA-10 (trade name, Titan Kogyo, Ltd., anatase type), RDI-S, RODI, RDO, RDE2, EDDI (trade name, manufactured by SACHTLEBEN, rutile type), JR-301, JR-403, JR-405, JR-600A, JR-605, JR-600E, JR-603, JR-805, JR-800, JR-806, JR-701, JRNC, JR (trade name, manufactured by TAYCA CORPORATION, rutile type), JA-1, JA-C, and JA-3 (trade name, manufactured by TAYCA CORPORATION, anatase type).

An average particle diameter of the white pigment is not particularly limited, and an upper limit of a volume-based cumulative 50% particle diameter (D50) is preferably 500 nm or less, more preferably 450 nm or less, and even more preferably 400 nm. Accordingly, aggregation of the white pigment in the nonaqueous ink composition can be effectively prevented, and the cleaning recovery property and the ejection stability can be improved. A lower limit of the volume-based cumulative 50% particle diameter (D50) is preferably 50 nm or more, and more preferably 100 nm or more. The white pigment has a volume-based cumulative 50% particle diameter (D50) in such a range, so that the storage stability of the nonaqueous ink composition can be improved.

Note that in the present description, the "volume-based cumulative 50% particle diameter (D50)" refers to a particle diameter at which a cumulative volume calculated based on a small diameter side is 50%. The "volume-based cumulative 50% particle diameter (D50)" may be referred to as a "volume average particle diameter D50" or a "median diameter". The "volume-based cumulative 50% particle diameter (D50)" can be measured using, for example, "FPIA-3000S" manufactured by Sysmex Corporation, or "SALD 7500 nano" laser diffraction particle size distribution meter manufactured by Shimadzu Corporation.

The content of the white pigment is not particularly limited, and a lower limit of the content of the white pigment is preferably 8 mass% or more, more preferably 9 mass% or more, and even more preferably 10 mass% or more in the total amount of the nonaqueous ink composition. The content of the white pigment is 8 mass% or more, so that a nonaqueous ink composition capable of providing a recorded matter having a better concealing property is obtained.

Especially, when the content of the white pigment is large, a recorded matter having a better concealing property can be obtained, but clogging tends to occur in a nozzle of an inkjet head, and the cleaning recovery property tends to be further decreased. However, by containing the organic solvent A (at least one selected from the group consisting of the alkylamide-based solvent (a1) and the cyclic amide-based solvent (a2)), a nonaqueous ink composition containing a large amount of white pigment also can effectively eliminate clogging in a nozzle of an inkjet head and improve the cleaning recovery property of the nonaqueous ink composition.

An upper limit of the content of the white pigment is preferably 20 mass% or less, more preferably 18 mass% or less, and even more preferably 16 mass% or less. Accordingly, the cleaning recovery property of the nonaqueous ink composition can be improved more effectively.

Note that the nonaqueous ink composition according to the present embodiment may contain a colorant other than the white pigment. Examples of the colorant other than the white pigment include a metal pigment containing a simple metal such as aluminum, silver, gold, nickel, chromium, tin, zinc, indium, titanium, copper, or an alloy.

### [Pigment Dispersant]

A pigment dispersant may be used in the nonaqueous ink composition according to the present embodiment, if necessary. As the dispersant, any pigment dispersant that can be used in the nonaqueous ink composition can be used. As the pigment dispersant, a polymer dispersant may be used. Such a dispersant includes a main chain such as a polyester-based main chain, a polyacrylic main chain, a polyurethane-based main chain, a polyamine-based main chain, or a polycaprolactone-based main chain, and a side chain having a polar group such as an amino group, a carboxyl group, a sulfone group, or a hydroxyl group. As a polyacrylic dispersant, for example, Disperbyk-2000, 2001, 2008, 2009, 2010, 2020, 2020N, 2022, 2025, 2050, 2070, 2095, 2150, 2151, 2155, 2163, 2164, BYKJET-9130, 9131, 9132, 9133, 9151 (manufactured by BYK Japan KK), Efka PX4310, PX4320, PX4330, PA4401, 4402, PA4403, 4570, 7411, 7477, PX4700, PX4701 (manufactured by BASF SE), TREPLUS D-1200, D-1410, D-1420, MD-1000 (manufactured by Otsuka Chemical Co., Ltd.), or Floren DOPA-15BHFS, 17HF, 22, G-700, 900, NC-500, GW-1500 (manufactured by KYOEISHA CHEMICAL Co., LTD.) can be used. As a polycaprolactone-based dispersant, for example, Ajisper PB821, PB822, PB881 (manufactured by Ajinomoto Fine-Techno Co., Inc.), Hinoact KF-1000, T-6000, T-7000, T-8000, T-8000E, T-9050 (manufactured by Kawaken Fine Chemicals Co., Ltd.), Solsperse 20000, 24000, 32000, 32500, 32550, 32600, 33000, 33500, 34000, 35200, 36000, 37500, 39000, 71000, 76400, 76500, 86000, 88000, J180, J200 (manufactured by Lubrizol Corporation), or TEGO Dispers 652, 655, 685, 688, 690 (manufactured by Evonik Japan Co., Ltd.) can be used. As a preferable dispersant, BYKJET-9130, 9131, 9132, 9133, 9151, Efka PX4310, PX4320, PX4330, PX4700, PX4701, Solsperse 20000, 24000, 32000, 33000, 33500, 34000, 35200, 39000, 71000, 76500, 86000, 88000, J180, J200, TEGO Dispers 655, 685, 688, 690, or the like can be used. These dispersants may be used alone or a mixture thereof may be used.

A content of the pigment dispersant is not particularly limited, and a lower limit of the content of the pigment dispersant is preferably 5 parts by mass or more, more preferably 15 parts by mass or more, and even more preferably 20 parts by mass or more with respect to 100 parts by mass of the pigment in the nonaqueous ink composition. An upper limit of the content of the pigment dispersant is preferably 150 parts by mass or less, more preferably 125 parts by mass or less, and even more preferably 100 parts by mass or less with respect to 100 parts by mass of the pigment in the nonaqueous ink composition.

### [Resin]

The nonaqueous ink composition according to the present embodiment may not contain a resin or may contain a resin. By containing a resin, fixability, water resistance, and stretchability of a recording layer formed by the nonaqueous ink composition can be improved. Further, glossiness of the obtained recorded matter can be improved.

The resin is not particularly limited, and as the resin, an acrylic resin, a polystyrene-based resin, a polyester-based resin, a vinyl chloride-based resin, a vinyl acetate resin, a vinyl chloride-vinyl acetate copolymer resin, a polyethylene-based resin, a polyurethane-based resin, a rosin-modified resin, a phenol-based resin, a terpene-based resin, a polyamide-based resin, a vinyl toluene-α-methylstyrene copolymer, an ethylene-vinyl acetate-based copolymer, cellulose acetate butyrate, cellulose acetate propionate, a silicone (silicon)-based resin, an acrylic amide-based resin, an epoxy-based resin, or a copolymer resin or a mixture thereof can be used. Among these, the acrylic resin, the vinyl chloride-based resin, the cellulose-based resin, the polyester-based resin, and the polyurethane-based resin are preferably contained.

The acrylic resin is not particularly limited as long as it is contained as a main component of a monomer that constitutes a (meth)acrylic acid ester monomer. The acrylic resin may be a homopolymer of one type of radical polymerizable monomer or may be any of copolymers obtained by selecting and using two or more types of radical polymerizable monomers. Especially, a preferred acrylic resin for the nonaqueous ink composition according to the present embodiment is a homopolymer of methyl methacrylate or a copolymer of methyl methacrylate and at least one compound selected from the group consisting of butyl methacrylate, ethoxyethyl methacrylate, and benzyl methacrylate. Alternatively, examples of a commercially available (meth)acrylic resin include "Paraloid B99N", "Paraloid B60", "Paraloid B66", and "Paraloid B82" manufactured by Rohm and Haas company.

The vinyl chloride-based resin may be a homopolymer formed of vinyl chloride monomers or may be any copolymer obtained by selecting and using two or more types of polymerizable monomers. Examples of the vinyl chloride-based resin copolymer include a vinyl chloride-vinyl acetate copolymer resin. The vinyl chloride-vinyl acetate copolymer resin is a polymer of vinyl chloride monomers and vinyl acetate monomers. Examples of the vinyl chloride-vinyl acetate copolymer resin include a vinyl chloride-vinyl acetate copolymer, a vinyl chloride/vinyl acetate/maleic acid copolymer, a vinyl chloride/vinyl acetate/vinyl alcohol copolymer, a vinyl chloride/vinyl acetate/hydroxyalkyl acrylate copolymer, and a mixture thereof. The vinyl chloride-vinyl acetate copolymer resin described above can be obtained and used from Nissin Chemical Industry Co., Ltd. under trade names such as "Solbin C", "Solbin CL", "Solbin CNL", "Solbin CLL", "Solbin CLL2", "Solbin C5R", "Solbin TA2", "Solbin TA3", "Solbin A", "Solbin AL", "Solbin TA5R", and "Solbin M5".

The vinyl chloride-vinyl acetate copolymer resin can be obtained by polymerization of vinyl chloride monomers and vinyl acetate monomers. A polymerization method can be a well-known polymerizing method. The polymerization method is preferably emulsion polymerization or suspension polymerization, and more preferably suspension polymerization.

The cellulose-based resin is a resin having a cellulose skeleton obtained by biologically or chemically introducing a functional group using cellulose as a raw material. For example, examples of the cellulose-based resin include a cellulose acetate alkylate resin such as a cellulose acetate butyrate resin, a cellulose acetate propionate resin, and a cellulose acetate propionate butyrate resin, a cellulose acetate resin, a nitrocellulose resin, and a mixture thereof. As the cellulose resin described above, products under trade names such as "CAB 551-0.01", "CAB 551-0.2", "CAB 553-0.4", "CAB 531-1", "CAB 381-0.1", "CAB 381-0.5", "CAB 381-2", "CAB 381-20", "CAP 504", and "CAP 482-0.5" manufactured by EASTMAN company can be obtained and used.

The polyester-based resin includes at least a structural unit obtained by polycondensation of an alcohol component and a carboxylic acid component. The polyester-based resin may include a modified polyester-based resin. As the polyester-based resin, products under trade names such as "VYLON 226", "VYLON 270", "VYLON 560", "VYLON 600", "VYLON 630", "VYLON 660", "VYLON 885", "VYLONGK 250", "VYLONGK 810", "VYLONGK 890" manufactured by TOYOBO CO., Ltd., and "elitleUE-3200", "elitleUE-3285", "elitleUE-3320", "elitleUE-9800", and "elitleUE-9885" manufactured by UNITICA Ltd. can be obtained and used.

The polyurethane-based resin includes at least a structural unit obtained by copolymerization of an alcohol component and an isocyanate component. The polyurethane-based resin may include a polyurethane-based resin modified with polyester, polyether, or caprolactone. As the polyurethane-based resin described above, products under trade names such as "UREARNO KL-424", "UREARNO KL-564", "UREARNO KL-593", and "UREARNO 3262" manufactured by Arakawa Chemical Industries, Ltd., and "PANDEX 372E", "PANDEX 390E", "PANDEX 394E", "PANDEX 304", "PANDEX 305E", "PANDEX P-870", "PANDEX P-910", "PANDEX P-895", "PANDEX 4030", and "PANDEX 4110" manufactured by DIC Corporation can be obtained and used.

Further, these acrylic resin, vinyl chloride-based resin, cellulose-based resin, polyester-based resin, and polyurethane-based resin may be used alone, but two kinds of these resins are preferably mixed and used, and a resin obtained by mixing the acrylic resin and the vinyl chloride-based resin is more preferably used. A content ratio of the acrylic resin to the vinyl chloride-based resin can be controlled so as to satisfy requirements of color development, a drying property, a coating property, printability, and the like required for the nonaqueous ink composition. When the acrylic resin and the vinyl chloride-based resin are mixed, a mixing ratio is not particularly limited and can be appropriately changed.

The resin contained in the nonaqueous ink composition is not particularly limited, and is preferably contained in a range of 0.05 mass% or more, more preferably contained in a range of 0.1 mass% or more, and even more preferably contained in a range of 0.5 mass% or more in the total amount of the nonaqueous ink composition. As a result, the surface drying property of the obtained recorded matter can be further improved. The resin contained in the nonaqueous ink composition is preferably contained in a range of 20.0 mass% or less, more preferably contained in a range of 15.0 mass% or less, and even more preferably contained in a range of 10.0 mass% or less in the total amount of the nonaqueous ink composition. As a result, the clogging in a nozzle of an inkjet head can be more effectively eliminated, the cleaning recovery property can be further improved, and the storage stability of the nonaqueous ink composition can be improved.

It is preferable to control a ratio of a content of the resin to a content of the white pigment (content of the resin contained in the nonaqueous ink composition/content of the white pigment contained in the nonaqueous ink composition). Specifically, a lower limit of the ratio of the content of the resin to the content of the white pigment is preferably 0.20 or more, more preferably 0.23 or more, and even more preferably 0.25 or more. As a result, the concealing property of the obtained recorded matter can be further improved. An upper limit of the ratio of the content of the resin to the content of the white pigment is preferably 1.00 or less, more preferably 0.90 or less, and even more preferably 0.80 or less. As a result, the ejection stability of the nonaqueous ink composition can be improved.

### [Surfactant]

In the nonaqueous ink composition according to the present embodiment, a surfactant may be added for a purpose of preventing volatilization of the nonaqueous ink composition in a device such as a nozzle portion or a tube, preventing solidification of the nonaqueous ink composition, and achieving redissolvability when the nonaqueous ink composition is solidified, for a purpose of reducing surface tension to improve wettability with respect to a recording medium (base material), for a purpose of preventing bleeding of the ink composition on the base material, for a purpose of improving rub resistance of a coated film, or for a purpose of further improving glossiness of a recorded matter.

Examples of the surfactant includes: for example, NONION P-208, P-210, P-213, E-202S, E-205S, E-215, K-204, K-220, S-207, S-215, A-10R, A-13P, NC-203, NC-207 (manufactured by NOF CORPORATION), Emulgen 106, 108, 707, 709, A-90, A-60 (manufactured by Kao Corporation), Floren G-70, D-90, TG-740W (manufactured by KYOEISHA CHEMICAL Co., LTD.), Poem J-0081HV (manufactured by Riken Vitamin Co., Ltd.), which are polyoxyalkylene alkyl ethers; Adekatol NP-620, NP-650, NP-660, NP-675, NP-683, NP-686, Adekacol CS-141E, TS-230E (manufactured by Adeka Co., Ltd.), which are aliphatic phosphate esters; and Sorgen 30V, 40, TW-20, TW-80, Neugen CX-100 (manufactured by DKS Co. Ltd.). As a fluorine-based surfactant, it is preferable to use a fluorine-modified polymer, and specific examples thereof include BYK-340 (manufactured by BYK Japan KK), and the like. As a silicone-based surfactant having a siloxane skeleton, it is preferable to use polyester-modified silicone or polyether-modified silicone, and specific examples thereof include BYK-313, 315N, 322, 326, 331, 347, 348, BYK-UV3500, 3510, 3530, 3570 (all manufactured by BYK Japan KK), and the like. Specific examples of an acetylene glycol-based surfactant include Surfynol (registered trademark) 82, 104, 465, 485, TG (all manufactured by Air Products and Chemicals, Inc.), Olfine (registered trademark) STG, and E1010 (all manufactured by Nissin Chemical Industry CO., Ltd.). The surfactant is not limited to those described above, an anionic surfactant, a cationic surfactant, an amphoteric surfactant, or a nonionic surfactant may be used.

Among these, the surfactant preferably includes a surfactant having a siloxane skeleton. A nonaqueous ink containing a surfactant having a siloxane skeleton can reduce bleeding in prints and provide a recorded matter having improved rub resistance.

As the surfactant having a siloxane skeleton, it is preferable to use a polyester-modified silicone or a polyether-modified silicone, and specific examples thereof include BYK-313, 315N, 322, 326, 331, 347, 348, BYK-UV3500, 3510, 3530, and 3570 (all manufactured by BYK Japan KK).

The nonaqueous ink composition according to the present embodiment may contain the surfactant having a siloxane skeleton as well as a surfactant different from the surfactant having a siloxane skeleton.

In the nonaqueous ink composition according to the present embodiment, a content of the surfactant is not particularly limited, and a lower limit of the content of the surfactant is preferably in a range of 0.01 mass% or more, more preferably in a range of 0.05 mass% or more, and even more preferably in a range of 0.1 mass% or more. A lower limit of the content of the surfactant is preferably 1.0 mass% or less, more preferably 0.9 mass% or less, and even more preferably 0.8 mass% or less.

### [Other Components]

The nonaqueous ink composition according to the present embodiment may contain, as optional components, known additives such as an antioxidant, a light stabilizer such as an ultraviolet absorber, an epoxide, a polycarboxylic acid, a surface conditioner, a slip agent, a leveling agent (acrylic-based leveling agent or silicone-based leveling agent), an antifoaming agent, a pH adjuster, a bactericide, a preservative, a deodorant, a charge adjuster, and a wetting agent. Specific examples of the antioxidant include a hindered phenol-based antioxidant, an amine-based antioxidant, a phosphorus-based antioxidant, a sulfur-based antioxidant, and a hydrazine-based antioxidant. Specific examples thereof include BHA (2,3-butyl-4-oxyanisole) and BHT (2,6-di-t-butyl-p-cresol). In addition, a benzophenone-based compound or a benzotriazole-based compound can be used as the ultraviolet absorber. In addition, specific examples of the epoxide include epoxy glyceride, epoxy fatty acid monoester, and epoxyhexahydrophthalate, and specific examples thereof include ADK CIZER O-130P and ADK CIZER O-180A (manufactured by ADEKA Corporation). Specific examples of the polycarboxylic acid include citric acid and maleic acid.

### (Viscosity and Surface Tension of Ink Composition)

A viscosity of the nonaqueous ink composition according to the present embodiment at 25°C is preferably 30 mPa·s or less, more preferably 20 mPa·s or less, and even more preferably 15 mPa·s or less, from the viewpoint of inkjet ejection performance and ejection stability. Alternatively, the viscosity of the nonaqueous ink composition according to the present embodiment is preferably 2.0 mPa·s or more, more preferably 3.0 mPa·s or more, and even more preferably 3.5 mPa·s or more.

Further, a surface tension of the nonaqueous ink composition according to the present embodiment at 25°C is preferably 20 mN/m or more, more preferably 22 mN/m or more, and even more preferably 24 mN/m or more, from the viewpoint of the inkjet ejection performance, the ejection stability, and a leveling property to the base material. Alternatively, the surface tension of the nonaqueous ink composition according to the present embodiment is preferably 40 mN/m or less, more preferably 37 mN/m or less, and even more preferably 35 mN/m or less.

### <<1-2. Nonaqueous Ink Composition according to Second Embodiment>>

A nonaqueous ink composition according to the present embodiment is a nonaqueous ink composition to be ejected by an inkjet method and containing a luster pigment and an organic solvent.

This organic solvent is characterized by containing the following organic solvent A.

Organic solvent A: at least one selected from the group consisting of an alkylamide-based solvent (a1) and a cyclic amide-based solvent (a2).

Therefore, by containing the organic solvent A (at least one selected from the group consisting of the alkylamide-based solvent (a1) and the cyclic amide-based solvent (a2)), a nonaqueous ink composition containing a luster pigment also can effectively eliminate clogging in a nozzle of an inkjet head and improve the cleaning recovery property of the nonaqueous ink composition.

In addition, according to opinions of the present inventors, the organic solvent A has a high drying property on a surface of a base material, but has low volatility within a plastic supply body (for example, a plastic tube). Therefore, the nonaqueous ink composition containing the organic solvent A can provide a recorded matter having an excellent surface drying property while maintaining the cleaning recovery property. A reason why the organic solvent A has a high drying property on the surface of the base material and low volatility within the plastic supply body is that the organic solvent A has low permeability to plastic, and a boiling point of the organic solvent itself and the volatility within the plastic supply body do not necessarily correlate.

Further, when a luster layer is formed by the nonaqueous ink composition according to the present embodiment containing the organic solvent A (at least one selected from the group consisting of the alkylamide-based solvent (a1) and the cyclic amide-based solvent (a2)), glossiness of the luster layer can be improved, and suitable metallic glossiness can be imparted.

Note that a moisture content in the nonaqueous ink composition according to the present embodiment is preferably 5.0 mass% or less, more preferably 1.0 mass% or less, and even more preferably 0.5 mass% or less in a total amount of the nonaqueous ink composition. When moisture derived from raw materials or moisture in the atmosphere is mixed during a producing process, storage stability and ejection stability of the nonaqueous ink composition may deteriorate, and a solid matter may be generated due to components contained in the nonaqueous ink composition. By reducing the moisture content in the nonaqueous ink composition to avoid containing moisture as much as possible (intentionally avoiding moisture), it is possible to more effectively improve the storage stability and the cleaning recovery property.

Hereinafter, each component contained in the nonaqueous ink composition according to the present embodiment will be described.

### [Organic Solvent]

An organic solvent can disperse or dissolve each component contained in the nonaqueous ink composition according to the present embodiment. The organic solvent contains an organic solvent A (at least one selected from the group consisting of an alkylamide-based solvent (a1) and a cyclic amide-based solvent (a2)).

Preferable types and preferable content ranges of the alkylamide-based solvent (a1) and the cyclic amide-based solvent (a2) are the same as those of the alkylamide-based solvent (a1) and the cyclic amide-based solvent (a2) in the nonaqueous ink composition according to the first embodiment described above.

In the organic solvents A, "containing the alkylamide-based solvent (a1)" is more preferable. When "containing the alkylamide-based solvent (a1)", both the cleaning recovery property and the surface drying property on a base material can be achieved, and furthermore, good member suitability with respect to an inkjet recording device can be achieved. The organic solvent A sufficiently exhibits the effects of the present invention by containing at least one of the alkylamide-based solvent (a1) or the cyclic amide-based solvent (a2), but two or more kinds of the solvents of the organic solvent A may be mixed. By mixing two or more kinds of the solvents, the balance between the storage stability, the member suitability, the surface drying property, and the cleaning recovery property can be freely set. When two or more kinds of the organic solvent A are mixed, a preferable range of a total content of the organic solvent A contained in the nonaqueous ink composition is the same as that of the nonaqueous ink composition according to the first embodiment described above.

### (4) Other Organic Solvents

The nonaqueous ink composition according to the present embodiment may contain organic solvents other than the organic solvent A described above. Specific examples thereof include glycol ether dialkyl in which OH groups at both ends of glycol are alkyl-substituted, glycol ether monoalkyl in which one OH group of glycol is alkyl-substituted, a carbonate ester, an acetate-based solvent, and a cyclic ester.

A preferable type of a glycol ether-based solvent is the same as the glycol ether-based solvent in the nonaqueous ink composition according to the first embodiment described above.

In addition, similar to the nonaqueous ink composition according to the first embodiment described above, among these glycol ether-based solvents described above, two or more kinds of glycol ether-based solvents having different flash points are preferably combined. Similar to the nonaqueous ink composition according to the first embodiment described above, a nonaqueous ink composition that is capable of achieving both the high cleaning recovery property and the high surface drying property on the base material and particularly effectively exhibits the effects of the present invention can be obtained.

In addition, examples of solvents other than the glycol ether-based solvent include an acetate-based solvent represented by the formula (2-3). By containing the acetate-based solvent, it becomes possible to effectively disperse the luster pigment, and the storage stability of the nonaqueous ink composition containing the luster pigment can be improved. 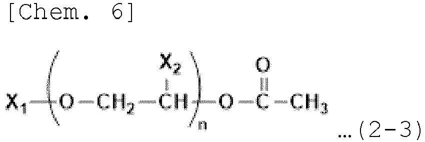
(In the formula (2-3), X₁ is an alkyl group, X₂ is hydrogen or an alkyl group, and
n represents an integer of 1 or more and 4 or less).

Examples of such an acetate-based solvent include an acetate-based solvent such as 3-methoxy butyl acetate, triethylene glycol butyl ether acetate, ethylene glycol butyl ether acetate, diethylene glycol ethyl ether acetate, diethylene glycol methyl ether acetate, diethylene glycol butyl ether acetate, propylene glycol methyl ether acetate, dipropylene glycol methyl ether acetate, 1-methoxy-2-propyl acetate, 2-methyl butyl acetate, 3-methoxybutyl ether acetate, and cyclohexyl acetate.

A content of the acetate-based solvent is not particularly limited, and a lower limit of the content of the acetate-based solvent is preferably 0.1 mass% or more, more preferably 0.5 mass% or more, and even more preferably 1.0 mass% or more. Accordingly, the storage stability of the nonaqueous ink composition containing the luster pigment can be further improved. An upper limit of the content of the acetate-based solvent is preferably 10.0 mass% or less, more preferably 7.0 mass% or less, and even more preferably 5.0 mass% or less. Accordingly, a content of other components such as the organic solvent A can be relatively increased, and therefore, a nonaqueous ink composition that is capable of achieving both the high cleaning recovery property and the high surface drying property on the base material can be obtained.

In addition, solvents other than the glycol ether-based solvent and the acetate-based solvent may be contained. Specific examples thereof include "other solvents other than the glycol ether-based solvent" exemplified in the nonaqueous ink composition according to the first embodiment described above. Among these, it is preferable to contain at least one selected from the group consisting of a glycol ether-based solvent, an acetate-based solvent, a cyclic ester, a carbonate ester, a dibasic acid ester, a lactic acid ester, an amide, and an alcohol. A preferred range of a total content of the other organic solvents contained in the nonaqueous ink composition is the same as that of the nonaqueous ink composition according to the first embodiment described above.

### [Luster Pigment]

The nonaqueous ink composition according to the present embodiment contains a luster pigment. The luster pigment has a function of imparting a metallic glossiness to an imaging subject. Examples of the luster pigment include, for example, those containing a pearl pigment and a metal-containing luster pigment. Among these, it is preferable that the luster pigment contains a metal-containing luster pigment. More suitable metallic glossiness can be imparted to the imaging subject.

Note that when the luster pigment contains a metal-containing luster pigment, a content of the metal-containing luster pigment is preferably 30 mass% or more, more preferably 50 mass% or more, and even more preferably 70 mass% or more in a total amount of the luster pigment.

Examples of the pearl pigment include a pigment having pearlescent luster or interference luster, such as mica, titanium dioxide-coated mica, fish scale flake, bismuth acid chloride, silicon dioxide, a metal oxide, and a laminated layer thereof.

Examples of the metal-containing luster pigment include at least one of a simple metal such as aluminum, silver, gold, nickel, chromium, tin, zinc, indium, titanium, and copper; a metal compound; an alloy; or a mixture thereof. As the metal-containing luster pigment, a metal-containing luster pigment containing at least one selected from the group consisting of aluminum, an aluminum alloy, indium, an indium alloy, nickel, and a nickel alloy is preferably used, and a metal-containing luster pigment containing aluminum or an aluminum alloy is particularly preferably used. By using a metal-containing luster pigment containing at least one selected from the group consisting of aluminum, an aluminum alloy, indium, an indium alloy, nickel, and a nickel alloy as the metal-containing luster pigment, more suitable metallic glossiness can be imparted to the imaging subject.

A lower limit of a content of the luster pigment is not particularly limited, and is preferably 0.5 mass% or more, more preferably 0.8 mass% or more, even more preferably 1.0 mass% or more, and still even more preferably 1.2 mass% or more in the total amount of the nonaqueous ink composition. Accordingly, more suitable metallic glossiness can be imparted to the imaging subject. Especially, when the content of the luster pigment is large, a recorded matter having better glossiness can be obtained, but clogging tends to occur in a nozzle of an inkjet head, and the cleaning recovery property tends to be further decreased. However, by containing the organic solvent A (at least one selected from the group consisting of the alkylamide-based solvent (a1) and the cyclic amide-based solvent (a2)), a nonaqueous ink composition containing a large amount of luster pigment also can effectively eliminate clogging in a nozzle of an inkjet head and improve the cleaning recovery property of the nonaqueous ink composition.

An upper limit of the content of the luster pigment is not particularly limited, and is preferably 10.0 mass% or less, more preferably 8.0 mass% or less, and even more preferably 6.0 mass% or more in the total amount of the nonaqueous ink composition. Accordingly, the cleaning recovery property of the nonaqueous ink composition can be improved.

A lower limit of a volume-based cumulative 50% particle diameter (D50) of the metal-containing luster pigment is not particularly limited, and is preferably 0.01 um or more, more preferably 0.05 um or more, even more preferably 0.10 um or more, and still even more preferably 0.50 um or more. By setting the volume-based cumulative 50% particle diameter (D50) of the metal-containing luster pigment to 0.01 um or more, when a luster layer is formed using the nonaqueous ink composition according to the present embodiment, glossiness of the luster layer can be improved, and suitable metallic glossiness can be imparted.

An upper limit of the volume-based cumulative 50% particle diameter (D50) of the luster pigment is not particularly limited, and is preferably 5.0 um or less, more preferably 3.0 um or less, and even more preferably 2.5 um or less. By setting the volume-based cumulative 50% particle diameter (D50) of the metal-containing luster pigment to 5.0 um or less, clogging in a nozzle of an inkjet head can be effectively eliminated, and the ejection stability and cleaning recovery property of the nonaqueous ink composition can be improved.

Especially, the nonaqueous ink composition according to the present embodiment contains the organic solvent A (at least one selected from the group consisting of the alkylamide-based solvent (a1) and the cyclic amide-based solvent (a2)), thereby being capable of effectively eliminating clogging in a nozzle of an inkjet head to improve the cleaning recovery property of the nonaqueous ink composition. Therefore, even when the volume-based cumulative 50% particle diameter (D50) of the luster pigment is increased, the decrease in the ejection stability and the cleaning recovery property of the nonaqueous ink composition can be prevented, and by increasing the volume-based cumulative 50% particle diameter (D50) of the metal-containing luster pigment, when a luster layer is formed using the nonaqueous ink composition according to the present embodiment, glossiness of the luster layer can be improved, and suitable metallic glossiness can be imparted.

Note that in the present description, the "volume-based cumulative 50% particle diameter (D50)" refers to a particle diameter at which a cumulative volume calculated based on a small diameter side is 50%. The "volume-based cumulative 50% particle diameter (D50)" may be referred to as a "volume average particle diameter D50" or a "median diameter".

An upper limit of a volume-based cumulative 90% particle diameter (D90) of the metal-containing luster pigment is not particularly limited, and is preferably 10.0 um or less, more preferably 7.0 um or less, and even more preferably 5.0 um or less.

Note that in the present description, the "volume-based cumulative 90% particle diameter (D90)" refers to a particle diameter at which a cumulative volume calculated based on a small diameter side is 90%.

The metal-containing luster pigment is preferably made of particles having a flat surface. By having a flat surface, a luster layer having high glossiness can be obtained. Examples of the particles having a flat surface include rectangular parallelepiped particles including cubes and particles having a flat plate shape or a scale shape. Accordingly, more suitable metallic glossiness can be imparted to the imaging subject. Further, as the particles having a flat surface, the particles having a flat plate shape or a scale shape are preferable.

In this case, a lower limit of a thickness of the metal-containing luster pigment is preferably 5 nm or more, more preferably 10 nm or more, and even more preferably 15 nm or more. An upper limit of the thickness of the metal-containing luster pigment is preferably 5.0 um or less, more preferably 3.0 um or less, and even more preferably 1.0 um or less.

Note that the volume-based cumulative 50% particle diameter (D50), the volume-based cumulative 90% particle diameter (D90), and the thickness of the luster pigment can be measured using, for example, "FPIA-3000S" manufactured by Sysmex Corporation, or "SALD 7500 nano" laser diffraction particle size distribution meter manufactured by Shimadzu Corporation.

The luster pigment can be obtained by mechanical shaping of metal-containing particles, for example, by milling in a ball mill or an attrition mill. The metal-containing particles can also be obtained by a well-known atomization method.

In addition, as another method for producing the luster pigment, it is also possible to pulverize a metal-containing thin film formed on a base material. Examples of such a method include a method of forming a metal-containing thin film of approximately 5.0 nm or more and 5.0 um or less on a flat base material coated with a peeling resin layer by vacuum deposition, ion plating or a sputtering method, peeling off the metal-containing thin film from the base material, and pulverizing the metal-containing thin film. Note that the term "metal-containing thin film" is used as a concept of also including a thin film containing a metal compound such as a metal oxide. A lower limit of a thickness of the metal-containing thin film is preferably 5 nm or more, more preferably 10 nm or more, and even more preferably 15 nm or more. An upper limit of the thickness of the metal-containing thin film is preferably 5.0 um or less, more preferably 3.0 um or less, and even more preferably 1.0 um or less.

Specific examples of the base material used in the production of the luster pigment include: a polytetrafluoroethylene film; a polyethylene film; a polypropylene film; a polyester film such as a polyethylene terephthalate; a polyamide film such as nylon 66 and nylon 6; a polycarbonate film; a triacetate film; and a polyimide film. A preferable base material is a film of polyethylene terephthalate or a copolymer thereof.

A lower limit of a preferable thickness of the base material used in the production of the luster pigment is not particularly limited, and is preferably 10 um or more, more preferably 15 um or more, and even more preferably 20 um or more. By setting the thickness of the base material to 10 um or more, handleability becomes good. An upper limit of a preferable thickness of the sheet-shaped base material is not particularly limited, and is preferably 150 um or less, more preferably 145 um or less, and even more preferably 140 um or less. By setting the thickness of the base material to 150 um or less, an obtained laminated body has improved flexibility and can be easily rolled and peeled.

Specific examples of a resin used for the peeling resin layer coated on the base material include polyvinyl alcohol, polyvinyl butyral, polyethylene glycol, polyacrylic acid, polyacrylamide, a cellulose derivative, polyvinyl acetal, an acrylic acid copolymer, and a modified nylon resin. In order to make the resin used for the peeling resin layer into a resin layer, the peeling resin layer is formed by coating a resin solution on a sheet-shaped base material by coating such as gravure coating, roll coating, blade coating, extrusion coating, dip coating, spin coating, or the like.

A lower limit of a thickness of the peeling resin layer is not particularly limited, and is preferably 0.1 um or more, more preferably 0.3 um or more, and even more preferably 0.5 um or more. By setting the thickness of the peeling resin layer to 0.1 um or more, the metal-containing thin film can be easily peeled off from the base material. An upper limit of the thickness of the peeling resin layer is not particularly limited, and is preferably 50 um or less, more preferably 30 um or less, and even more preferably 10 um or less. By setting the thickness of the peeling resin layer to 50 um or less, the metal-containing thin film can be easily peeled off from the base material.

Note that the base material on which the metal-containing thin film is formed may be used to produce the nonaqueous ink composition or the dispersion liquid used for producing the nonaqueous ink composition. The base material may be immersed in a solvent that can dissolve the peeling resin and does not react with the luster pigment, or may be subjected to an ultrasonic treatment simultaneously with the immersion. Examples of such a solvent include an organic solvent that constitutes the nonaqueous ink composition. The peeling resin functions as a dispersant that disperses the luster pigment, and improves dispersibility of the luster pigment. In this case, a particle diameter and a film thickness of the luster pigment are adjusted by conditions for forming the metal-containing thin film and an ultrasonic dispersion time. Note that the luster pigment may be recovered from a peeling resin dissolving solution by precipitating and separating the luster pigment by centrifugation, and the luster pigment may be dispersed in the organic solvent constituting the nonaqueous ink composition. In addition, the luster pigment may be subjected to a surface treatment with a silane compound, a fluorine-containing compound, phosphoric acid, phosphate, a fatty acid, a fatty acid ester, or the like.

Note that the nonaqueous ink composition according to the present embodiment may contain a colorant other than the luster pigment.

### [Pigment Dispersant]

A dispersant may be used in the nonaqueous ink composition according to the present embodiment, if necessary. A preferable type of the pigment dispersant is the same as that of the pigment dispersant in the nonaqueous ink composition according to the first embodiment described above. A preferable range of a content of the pigment dispersant contained in the nonaqueous ink composition is the same as that of the nonaqueous ink composition according to the first embodiment described above.

### [Resin]

The nonaqueous ink composition according to the present embodiment may not contain a resin or may contain a resin. By containing a resin, fixability, water resistance, and stretchability of a recording layer formed by the nonaqueous ink composition can be improved. Further, glossiness of the obtained recorded matter can be improved. A preferable type of the resin is the same as that of the resin in the nonaqueous ink composition according to the first embodiment described above. A preferable range of a content of the resin contained in the nonaqueous ink composition is the same as that of the nonaqueous ink composition according to the first embodiment described above.

### [Surfactant]

A surfactant may be added to the nonaqueous ink composition according to the present embodiment. A preferable type of the surfactant is the same as that of the surfactant in the nonaqueous ink composition according to the first embodiment described above. A preferable range of a content of the surfactant contained in the nonaqueous ink composition is the same as that of the nonaqueous ink composition according to the first embodiment described above.

### [Wax]

A wax may be added to the nonaqueous ink composition according to the present embodiment. Accordingly, it is possible to improve scratch resistance of a printed matter obtained by imparting a slip property to a surface of the luster layer formed using the nonaqueous ink composition according to the present embodiment.

Here, the wax is an organic substance or silicone compound that is solid at room temperature or lower and liquefies when heated. Specific examples thereof include: low molecular weight polyolefin waxes such as polyethylene, polypropylene, polybutene, a polyethylene mixed wax, a polypropylene wax, and a polypropylene mixed wax; silicones (silicon) having a softening point; silicone (silicon)-acrylic waxes; fatty acid amides such as oleic acid amide, erucic acid amide, ricinoleic acid amide, and stearic acid amide; vegetable waxes such as ester wax, carnauba wax, rice wax, candelilla wax, wood wax, and jojoba oil; animal waxes such as beeswax, lanolin, and spermaceti; mineral waxes such as montan wax, ozokerite, ceresin, and Fischer-Tropsch wax; petroleum waxes such as paraffin wax, microcrystalline wax, petrolatum, paraffin mixed wax; and modified products thereof. These waxes are easily available as commercially available products. In the nonaqueous ink composition according to the present embodiment, one type of wax may be used alone or two or more types may be used in combination.

The wax contained in the nonaqueous ink composition according to the present embodiment may be a liquid at room temperature, and a melting point of the wax is not particularly limited, and a lower limit of the melting point is preferably 20°C or higher, more preferably 25°C or higher, and even more preferably 30°C or higher. By setting the melting point of the wax to 20°C or higher, it is possible to prevent the wax of an obtained printed matter from melting, which makes surfaces of the obtained printed matter sticky and causes the printed matter to adhere to each other. An upper limit of the melting point is preferably 130°C or lower, more preferably 125°C or lower, and even more preferably 120°C or lower. By setting the melting point of the wax to 130°C or lower, whitening of the obtained printed matter can be prevented, and a more suitable metallic glossiness can be imparted to the imaging subject.

In the nonaqueous ink composition according to the present embodiment, a lower limit of a content of the wax is not particularly limited, and is preferably 0.05 mass% or more, more preferably 0.07 mass% or more, and even more preferably 0.1 mass% or more in the total amount of the nonaqueous ink composition. Accordingly, more suitable slip property can be imparted to a surface of the imaging subject, and a printed matter having good scratch resistance can be obtained. An upper limit of the content of the wax is preferably 1.0 mass% or less, more preferably 0.8 mass% or less, and even more preferably 0.5 mass% or less in the total amount of the nonaqueous ink composition. Accordingly, more suitable metallic glossiness can be imparted to the imaging subject.

### [Other Components]

The nonaqueous ink composition according to the present embodiment may contain other components as optional components. Types of other components contained in the nonaqueous ink composition are the same as those in the nonaqueous ink composition according to the first embodiment described above.

### (Viscosity and Surface Tension of Nonaqueous Ink Composition)

Preferable ranges of the viscosity and the surface tension of the nonaqueous ink composition according to the present embodiment are the same as those of the nonaqueous ink composition according to the first embodiment described above.

### <2. Method for Producing Ink Composition>

A method for producing the nonaqueous ink composition according to the present embodiment can be mixing the organic solvent A (at least one selected from the group consisting of an alkylamide-based solvent (a1) and a cyclic amide-based solvent (a2)), a white pigment or a luster pigment, and other components (for example, a resin) as necessary using a paint shaker. In this case, each component may be dispersed with zirconia beads. The obtained nonaqueous ink composition may be adjusted to a desired dissolved oxygen amount and a desired dissolved nitrogen amount by, for example, performing a degassing treatment as necessary.

In this case, the organic solvent is preferably dried in advance. By drying the organic solvent in advance, an amount of moisture contained in the nonaqueous ink composition can be reduced. Examples of a method for drying the organic solvent include a method of spraying an inert gas (for example, a nitrogen gas) for a predetermined period of time, in which the organic solvent is dried in an inert gas atmosphere such as nitrogen, a method of distilling and refining the organic solvent, a method of permeating the organic solvent through a semi-permeable membrane that selectively permeates water, and a method of selectively adsorbing water mixed in the organic solvent with a water adsorbent that adsorbs water.

### <<3. Ink Set>>

An ink set according to the present embodiment includes a plurality of ink compositions including the nonaqueous ink compositions described above. The nonaqueous ink compositions according to the first and second embodiments described above are capable of achieving both the high cleaning recovery property and the surface drying property on the base material, and also in the ink set according to the present embodiment, a recorded matter having an excellent surface drying property can be obtained.

Examples of ink compositions other than the nonaqueous ink composition containing the white pigment according to the first embodiment described above include a black ink composition containing a black pigment, a colored ink composition of yellow, magenta, cyan, light magenta, light cyan, light black, orange, green, or red, a luster ink composition containing a luster pigment, and a clear ink composition containing no colorants.

For example, a concealing property of a recorded matter can be improved, which is obtained by using the nonaqueous ink composition containing the white pigment according to the first embodiment described above as a nonaqueous ink composition used to form an under layer or an upper layer. In addition, for example, by using a colored ink composition as the ink composition other than the nonaqueous ink composition containing the white pigment according to the first embodiment described above, a desired image can be formed.

In addition, the nonaqueous ink composition containing the white pigment according to the first embodiment described above and at least one selected from the group consisting of the black ink composition, the colored ink composition, the luster ink composition, and the clear ink composition may be simultaneously ejected onto the surface of the base material by an inkjet method.

Examples of the ink composition other than the nonaqueous ink composition containing the luster pigment according to the second embodiment described above include a black ink composition containing a black pigment, a colored ink composition of yellow, magenta, cyan, light magenta, light cyan, light black, white, orange, green, or red, and a clear ink composition containing no colorants.

For example, glossiness of a recorded matter can be improved, which is obtained by using the nonaqueous ink composition containing the luster pigment according to the second embodiment described above as a nonaqueous ink composition used to form an under layer or an upper layer. In addition, for example, by using an ink composition other than the nonaqueous ink composition containing the luster pigment as a colored ink composition, a desired image can be formed.

In addition, the nonaqueous ink composition containing the luster pigment according to the second embodiment described above and at least one selected from the group consisting of the black ink composition, the colored ink composition, the white ink composition, and the clear ink composition may be simultaneously ejected onto the surface of the base material by an inkjet method.

### <<4. Recording Method Using Ink Composition>>

A recording method according to the present embodiment is a recording method including ejecting the nonaqueous ink compositions according to the first and second embodiments described above onto the surface of the base material by an inkjet method. The nonaqueous ink compositions according to the first and second embodiments described above are capable of achieving both the high cleaning recovery property and the surface drying property on the base material, and also in the recording method according to the present embodiment, a recorded matter having an excellent surface drying property can be obtained.

Especially, the nonaqueous ink compositions according to the first and second embodiments described above have an extremely excellent surface drying property, and can be ejected onto the surface of the base material by an inkjet method by conveying the base material (recording medium) at a high speed, which makes it possible to improve a producing speed of the printed matter. The same applies to a method for producing a printed matter described below.

Specifically, a recording speed (conveying speed of the base material) in the recording method according to the present embodiment depends on a type of the base material, and is preferably 10 m²/h or more, and more preferably 20 m²/h or more, and even more preferably 30 m²/h or more.

As an inkjet recording device that ejects the nonaqueous ink compositions according to the first and second embodiments described above by the inkjet method, a well-known device in the related art can be used. For example, an inkjet printer such as VersaArt RE-640 manufactured by Rowland DG Co., Ltd. can be used.

As an example of a configuration of the inkjet recording device, an on-carriage type and a serial printer type inkjet recording device will be described. However, the inkjet recording device capable of implementing the recording method according to the present embodiment may be an off-carriage type inkjet recording device in which an ink cartridge is fixed to the outside, or may be a line printer type inkjet recording device in which an ink composition is ejected onto a recording medium (base material) without moving an inkjet head.

Further, the inkjet recording device preferably includes a heating mechanism and a fixing mechanism that fixes the base material. The organic solvent contained in the nonaqueous ink composition can be volatilized by controlling a surface temperature of the base material by the heating mechanism provided in the inkjet recording device to dry the nonaqueous ink composition landed on the base material (recording medium).

Further, by the fixing mechanism that fixes the base material, the nonaqueous ink composition can be dried in a state in which the base material (recording medium) is fixed, and uneven application of heat due to bending of the base material by heating can be prevented. Accordingly, the nonaqueous ink composition landed on the base material (recording medium) can be effectively dried. Such a drying mechanism and a fixing mechanism are particularly effective when conveying the base material (recording medium) at a high speed to improve the producing speed of the recorded matter.

The heating mechanism provided in the inkjet recording device may be a preheater, a platen heater, an after-heater, or the like, or may be a mechanism that blows warm air to the recorded matter. In addition, a plurality of these heating mechanisms may be combined.

The surface temperature of the base material heated by the heating mechanism is not particularly limited as long as the organic solvent contained in the nonaqueous ink composition can be volatilized, and a lower limit of the surface temperature of the base material is preferably 20°C or higher, more preferably 30°C or higher, and even more preferably 40°C or higher. An upper limit of the surface temperature of the base material is preferably 70°C or lower, more preferably 60°C or lower, and even more preferably 50°C or lower.

A method of ejecting ink by the inkjet method may be a piezo method using a piezoelectric element or a thermal method using a heating element, and is not particularly limited.

Note that since the nonaqueous ink compositions according to the first and second embodiments described above each have a high drying property, such a mechanism is not an essential configuration in the inkjet recording device according to the present embodiment. For example, the producing speed of the printed matter may be improved by reducing a size of the inkjet recording device without the heating mechanism and by shortening an entire conveying portion.

Further, the inkjet recording device may include a plastic tube that connects a container (an ink cartridge, a bottle, or the like) that stores the nonaqueous ink compositions according to the first and second embodiments described above and an inkjet head that ejects the nonaqueous ink compositions according to the first and second embodiments described above, and the nonaqueous ink compositions according to the first and second embodiments described above may be supplied to the inkjet head through the plastic tube and ejected by the inkjet method.

The organic solvent A (at least one selected from the group consisting of an alkylamide-based solvent (a1) and a cyclic amide-based solvent (a2)) contained in the nonaqueous ink compositions according to the first and second embodiments described above can be inkjet-ejected while maintaining the component amount of the organic solvent contained in the nonaqueous ink compositions for the reason that even when the organic solvent A is present in the plastic tube, a volatilization amount thereof is relatively small compared with those of other organic solvents. Accordingly, the clogging in the nozzle of the inkjet head can be more effectively eliminated, and the cleaning recovery property of the nonaqueous ink composition can be improved.

A material of the plastic tube is not particularly limited, and examples thereof include a polyolefin-based resin such as a polyethylene-based resin, an ethylene propylene diene rubber, nylon, polyurethane, and PTFE. Among these, the polyethylene-based resin and the ethylene propylene diene rubber are preferable.

In addition, the inkjet recording device according to the present embodiment uses the nonaqueous ink composition containing the white pigment according to the first embodiment described above and the nonaqueous ink composition containing the luster pigment according to the second embodiment described above as well as ink of various colors such as yellow, magenta, cyan, black, light magenta, light cyan, light black, orange, green, or red, and an order of colors to be printed or positions or configurations of heads are not particularly limited. In addition, the inkjet recording device according to the present embodiment may include or may not include a winding mechanism for the recording medium (base material), a drying mechanism for drying the surface of the base material, and an ink circulation mechanism.

### <<5. Method for Producing Recorded Matter>>

The recording method using the nonaqueous ink compositions according to the first and second embodiment described above can also be defined as a method for producing a recorded matter. The nonaqueous ink compositions according to the first and second embodiments described above are capable of achieving both the high cleaning recovery property and the surface drying property on the base material, and also in the method for producing a recorded matter according to the present embodiment, a recorded matter having an excellent surface drying property can be obtained.

### <<6. Recorded Matter>>

Each layer constituting the recorded matter produced by the method for producing a recorded matter according to the present embodiment described above will be described. Note that the recorded matter in this embodiment is a recorded matter in which a white layer made of the nonaqueous ink composition according to the first embodiment described above and/or a luster layer made of the nonaqueous ink composition according to the second embodiment described above are formed on the surface of the base material, but the nonaqueous ink composition according to the first embodiment described above is not limited to that used for forming the white layer, and the nonaqueous ink composition according to the second embodiment described above is not limited to that used for forming the luster layer. In addition, for example, a recording layer that forms a desired image may be formed by simultaneously ejecting the nonaqueous ink composition containing the white pigment according to the first embodiment described above and a colored ink composition of yellow, magenta, cyan, black, light magenta, light cyan, light black, orange, green, or red. In addition, a desired image may be formed by simultaneously ejecting the nonaqueous ink composition containing the luster pigment according to the second embodiment described above and a colored ink composition of yellow, magenta, cyan, black, light magenta, light cyan, light black, orange, green, red, or white. Note that "simultaneously ejecting the nonaqueous ink composition containing the white pigment described above and a colored ink composition" does not mean ejecting such a plurality of ink compositions onto the surface of the base material at exactly the same timing using an inkjet method, but means forming a desired image by ejecting the plurality of ink compositions at approximately the same timing, as in a normal inkjet method (including any method such as a serial head method or a line head method). Similarly, "simultaneously ejecting the nonaqueous ink composition containing the luster pigment described above and a colored ink composition" does not mean ejecting such a plurality of ink compositions onto the surface of the base material at exactly the same timing using an inkjet method, but means forming a desired image by ejecting the plurality of ink compositions at approximately the same timing, as in a normal inkjet method (including any method such as a serial head method or a line head method).

### [Medium (Recording Medium)]

The base material (recording medium) that can be used in the recording method according to the present embodiment is not particularly limited, and a resin base material, a non-absorbent base material such as metal and a plate glass, an absorbent base material such as paper and cloth, or a surface-coated base material such as a base material including a receiving layer may be used, and various base materials can be used.

Among these, since each of the above nonaqueous ink compositions according to the first and second embodiments described above is a nonaqueous ink composition containing no moisture, a base material having a surface mainly made of a resin is preferable. Especially, since the nonaqueous ink compositions according to the first and second embodiments described above contain the organic solvent A (at least one selected from the group consisting of an alkylamide-based solvent (a1) and a cyclic amide-based solvent (a2)) having permeability with respect to the resin base material, bleeding in prints on a medium (recording medium) whose surface is made of a resin is reduced. Examples of the resin include a polyvinyl chloride-based polymer, acryl, PET, polycarbonate, PE, and PP. In addition, the resin may also be used for a resin base material (so-called resin base material for lamination) on a premise that a film is attached to a recording surface of a recorded matter. Especially, a base material (recording medium) whose surface is made of a hard or soft polyvinyl chloride-based polymer is preferable. Examples of the base material (recording medium) whose surface is made of a polyvinyl chloride polymer include a polyvinyl chloride base material (film or sheet).

### [White Layer]

A white layer is a layer formed by volatilization of the solvent contained in the nonaqueous ink composition containing the white pigment according to the first embodiment described above. The nonaqueous ink composition containing the white pigment according to the first embodiment described above can effectively eliminate the clogging in a nozzle of an inkjet head and improve the cleaning recovery property of the nonaqueous ink composition even when the nonaqueous ink composition contains a large amount of the white pigment. In addition, the nonaqueous ink composition containing the white pigment according to the first embodiment described above has a high surface drying property on the base material, and does not take much time to dry even when the ejection amount of the nonaqueous ink composition is increased to impart an excellent concealing property to the recorded matter. Therefore, using the nonaqueous ink composition containing the white pigment according to the first embodiment described above, it is easy to control, for example, the content of the white pigment and the ejection amount of the nonaqueous ink composition, and a white layer having a high concealing property can be easily formed. This white layer may be an under layer or an upper layer of a recording layer described later, or may be the same as the recording layer described later.

### [Luster Layer]

A luster layer is a layer formed by volatilization of the solvent contained in the nonaqueous ink composition containing the luster pigment according to the second embodiment described above. The nonaqueous ink composition containing the luster pigment according to the second embodiment described above can effectively eliminate the clogging in a nozzle of an inkjet head and improve the cleaning recovery property of the nonaqueous ink composition even when the nonaqueous ink composition contains a large amount of the luster pigment. In addition, the nonaqueous ink composition containing the luster pigment according to the second embodiment described above has a high surface drying property on the base material, and does not take much time to dry even when the ejection amount of the nonaqueous ink composition is increased to impart an excellent concealing property to the recorded matter. Therefore, using the nonaqueous ink composition containing the luster pigment according to the second embodiment described above, it is easy to control, for example, the content of the luster pigment and the ejection amount of the nonaqueous ink composition, and a luster layer having high glossiness can be easily formed. This luster layer may be an under layer or an upper layer of a recording layer described later, or may be the same as the recording layer described later.

### [Recording Layer]

A recording layer is a layer in which a desired image or the like formed of ink compositions of yellow, magenta, cyan, black, light magenta, light cyan, light black, orange, green, red, or the like is formed. The nonaqueous ink composition according to the first embodiment containing the white pigment that forms the white layer and the nonaqueous ink composition according to the second embodiment containing the luster pigment that forms the luster layer each have a high surface drying property on the base material, and therefore, the producing speed of the printed matter can be improved.

### [Other Layers]

The recorded matter according to the present embodiment may further include a layer having a desired function on the medium (recording medium) or on an upper surface of the entire recorded matter. For example, a primer layer may be formed to improve adhesion between the medium (recording medium) and the luster layer or recording layer, and the luster layer containing the luster pigment, the white layer containing the white pigment, or the like may be formed as the under layer. Note that these luster layer and white layer may be formed or may not be formed using the nonaqueous ink compositions according to the first and second embodiments described above. For example, an overcoat layer containing at least one of a resin or a wax may be formed on the upper surface of the entire recorded matter for a purpose of further imparting rub resistance and glossiness to the recorded matter. In addition, a layer expressing a feeling of unevenness (matte surface) may be formed on the upper surface of the entire recorded matter by containing a filler or changing a film thickness for each pixel. Further, in order to impart weather resistance to the recorded matter, a weather resistant layer containing an ultraviolet absorber, a light stabilizer, or the like, a luster layer containing a luster pigment, a white layer containing a white pigment, or the like may be formed on the upper surface of the entire recorded matter. Note that these luster layer and white layer may be formed or may not be formed using the nonaqueous ink compositions according to the first and second embodiments described above.

### EXAMPLES

Hereinafter, the present invention will be described in more detail with reference to Examples, whereas the present invention is not limited to these descriptions.

### (First Embodiment)

### 1. Preparation of Resin

### (1) Acrylic Resin

A mixture of 150 g of methyl methacrylate, 50 g of butyl methacrylate, and a predetermined amount of t-butylperoxy-2-ethylhexanoate (polymerization initiator) was added dropwise to 300 g of diethylene glycol diethyl ether maintained at 100°C over 1.5 hours. After completion of dropwise addition, the obtained mixture was reacted at 100°C for 2 hours and then cooled to obtain a colorless and transparent polymer solution of methyl methacrylate. Thereafter, a solvent was sufficiently distilled off from the polymer solution to obtain a polymer of methyl methacrylate. At this time, an amount of the t-butylperoxy-2-ethylhexanoate, which is a polymerization initiator, was changed to control a polymerization average molecular weight of methyl methacrylate (acrylic resin) to 10,000 to 105,000 (a mass of the polymerization initiator used at this time is described in Table 1 below, and is indicated as an "initiator amount" in Table 1.).

### (2) Vinyl Chloride-Vinyl Acetate Copolymer Resin

After nitrogen substitution, an autoclave equipped with a stirring device was charged with 100 parts by mass of deionized water, 40 parts by mass of methanol, 32 parts by mass of vinyl chloride, 5 parts by mass of vinyl acetate, 0.2 parts by mass of glycidyl methacrylate, 3.55 parts by mass of hydroxypropyl acrylate, 0.1 parts by mass of hydroxypropyl methyl cellulose (suspension agent), 0.026 parts by mass of di-2-ethylhexyl peroxydicarbonate (polymerization initiator), and a predetermined amount of di-3,5,5-trimethylhexanol peroxide (polymerization initiator), and the obtained mixture was heated to 63°C while being stirred in a nitrogen gas atmosphere, and immediately after reaching 63°C, 48 parts by mass of vinyl chloride was continuously injected over 6 hours and a mixture of 0.6 parts by mass of glycidyl methacrylate and 10.65 parts by mass of hydroxypropyl acrylate was continuously injected over 5.4 hours to cause a copolymerization reaction. When an internal pressure of the autoclave reached 0.3 MPa, a residual pressure was released, and the resultant was cooled, and a resin slurry was taken out, filtered, and dried to obtain a vinyl chloride-based copolymer resin. At this time, the amount of di-3,5,5-trimethylhexanol peroxide, which is a polymerization initiator, was changed to control a polymerization average molecular weight of the vinyl chloride-vinyl acetate copolymer resin to 40,000 to 90,000 (a mass of the polymerization initiator used at this time is described in Table 1 below, and is indicated as an "initiator amount" in Table 1.).

**[Table 1]**

| | | Weight average molecular weight (Relative molecular mass) | Initiator amount (g) |
|---|---|---|---|
| Acrylic resin | Synthetic resin 1 | Mw=10000 | 4.50 |
| | Synthetic resin 2 | Mw=15000 | 3.30 |
| | Synthetic resin 3 | Mw=30000 | 1.20 |
| | Synthetic resin 4 | Mw=80000 | 0.20 |
| | Synthetic resin 5 | Mw=105000 | 0.10 |
| Vinyl chloride-vinyl | Synthetic resin 1 | Mw=40000 | 0.58 |
| acetate copolymer resin | Synthetic resin 2 | Mw=50000 | 0.37 |
| | Synthetic resin 3 | Mw=75000 | 0.14 |
| | Synthetic resin 4 | Mw=90000 | 0.06 |

### (3) Polyester-based Resin

A round bottom flask was charged with 104 parts by mass of terephthalic acid, 104 parts by mass of isophthalic acid, 79 parts by mass of ethylene glycol, 89 parts by mass of neopentyl glycol, and 0.1 parts by mass of tetrabutyl titanate, and a temperature of the round bottom flask was gradually increased to 240°C over 4 hours, and an esterification reaction was performed while removing a precipitate outside the system. After completion of the esterification reaction, a pressure was reduced to 10 mmHg over 30 minutes, and the temperature was increased to 250°C to perform initial polymerization. Thereafter, late polymerization was performed for 1 hour at 1 mmHg or less to obtain the polyester-based resin.

### (4) Polyurethane-based Resin

Into a round bottom flask were put 192.5 parts by mass of polycarbonate diol (PLACCEL CD-220, manufactured by Daicel Corporation), 41.6 parts by mass of isophorone diisocyanate (IPDI, manufactured by Evonik), and 100 parts by mass of N,N-diethylformamide (DEF), followed by uniformly mixing, and then a mixed liquid of 0.01 parts by mass of T100 BHJ (catalyst) and 0.09 parts by mass of N,N-diethylformamide (DEF) was put into the flask and reacted at 75°C for 3 hours to obtain a prepolymer having an isocyanate group at the end. After 250 parts by mass of N,N-diethylformamide (DEF) was added to the prepolymer and uniformly dissolved therein, a chain extender solution obtained by dissolving 12 parts by mass of 3-aminomethyl-3,5,5-trimethylcyclohexylamine (IPD: manufactured by Evonik) in 100 parts by mass of N,N-diethylformamide (DEF) was added thereto, and the mixture was further stirred at 60°C for 40 minutes. Thereafter, a reaction terminator obtained by dissolving 3.8 parts by mass of monoisopropanolamine (MIPA: Daicel Corporation) in 50 parts by mass of N,N-diethylformamide (DEF) was added, and finally, 250 parts by mass of N,N-diethylformamide (DEF) was added to obtain a polyurethane solution having a solid content of 25.0 mass%.

### 2. Production of Nonaqueous Ink Composition

Nonaqueous ink compositions in Examples and Comparative Examples were produced using the respective organic solvents, resins, dispersants, and pigments according to proportions of respective components shown in the following tables. Specifically, the respective components were dispersed with zirconia beads using a paint shaker to prepare nonaqueous ink compositions. The unit is mass%.

### 3. Evaluation

### (Bleeding Property)

The nonaqueous ink compositions in Examples and Comparative Examples were evaluated for a bleeding property. Specifically, the nonaqueous ink compositions in Examples and Comparative Examples were used in an inkjet method using an inkjet printer (trade name: VersaArt RE-640, manufactured by Roland DG Corporation) to print an image having 6 pt characters on a recording medium (glued polyvinyl chloride film (IMAGin JT5829R, manufactured by MACtac) in a high-quality printing mode (1440 × 720 dpi) at a base material surface temperature of 40°C, and the obtained printed matter was dried in an oven at 60°C for 5 minutes, and then bleeding (indicated as a "bleeding property" in the table) of the printed matter was visually observed with a loupe (× 10). Evaluation Criteria Evaluation 5: no ink bleeding is observed with the loupe. Evaluation 4: no ink bleeding is visually observed, and 6 pt characters are clear. Evaluation 3: slight ink bleeding is visually observed, but design is not impaired. Evaluation 2: bleeding of ink is visually observed, but 6 pt characters are identifiable. Evaluation 1: significant bleeding of ink is visually observed, and 6 pt characters cannot be visually recognized.

### (Surface Drying Property)

The nonaqueous ink compositions in Examples and Comparative Examples were evaluated for a surface drying property. Specifically, a solid image was printed on a recording medium (glued polyvinyl chloride film (IMAGin JT5829R, manufactured by MACtac)) in a high-quality printing mode (1440 × 720 dpi) in the same manner as in the above-mentioned bleeding property evaluation, and time until the solid image was dried at 40°C (indicated as a "surface drying property" in the table) was measured. Evaluation Criteria

Evaluation 5: drying is performed in less than 2 minutes.

Evaluation 4: drying is performed in 2 minutes or more and less than 4 minutes. Evaluation 3: drying is performed in 4 minutes or more and less than 6 minutes. Evaluation 2: drying is performed for 6 minutes or more and less than 8 minutes. Evaluation 1: drying is performed in 8 minutes or more.

### (Storage Stability)

Storage stability of each of the nonaqueous ink compositions in Examples, Comparative Examples, and Reference Examples was evaluated. Specifically, the nonaqueous ink composition was stored at 60°C for one month, and changes in viscosity and volume-based cumulative 50% particle diameter (D50) of a pigment before and after a test were observed, and the storage stability was evaluated according to the following criteria. Note that the viscosity of the ink was measured under a condition of 20°C using a falling ball type viscosity meter (AMVn manufactured by Anton Paar), and the volume-based cumulative 50% particle diameter (D50) of the pigment was measured under a condition of 25°C using a particle diameter distribution measurement device (NANOTRACWAVE particle size analyzer manufactured by Microtrac BEL Co., Ltd.). Note that in the following evaluation, the nonaqueous ink composition having a larger rate of change in the "viscosity" and the "volume-based cumulative 50% particle diameter (D50) of the pigment" was evaluated (indicated as "storage stability" in the table). Evaluation Criteria

Evaluation 5: the rates of change in both the viscosity and the volume-based cumulative 50% particle diameter (D50) of the pigment are less than 3%. Evaluation 4: either the rate of change in the viscosity or the rate of change in the volume-based cumulative 50% particle diameter (D50) of the pigment is 3% or more and less than 5%. Evaluation 3: either the rate of change in the viscosity or the rate of change in the volume-based cumulative 50% particle diameter (D50) of the pigment is 5% or more and less than 8%. Evaluation 2: either the rate of change in the viscosity or the rate of change in the volume-based cumulative 50% particle diameter (D50) of the pigment is 8% or more and less than 10%. Evaluation 1: either the rate of change in the viscosity or the rate of change in the volume-based cumulative 50% particle diameter (D50) of the pigment is 100 or more.

### (Concealing Property)

A concealing property of each of the nonaqueous ink compositions in Examples, Comparative Examples, and Reference Examples was evaluated. Specifically, a solid area was printed on a recording medium (glued transparent polyvinyl chloride film (SCP-AS manufactured by 3M Company)) at a base material surface temperature of 40°C in a high-quality printing mode (1440 × 720 dpi) in the same manner as in the above-mentioned bleeding property evaluation, and the printed solid area was dried for one day at room temperature. Thereafter, visible light transmittance was measured in 1 nm increments in a range of 380 nm to 780 nm using a spectrophotometer (UV-1800 manufactured by Shimadzu Corporation), and an average value obtained by dividing an integrated value by the number of measurements was recorded as the visible light transmittance.

### Evaluation Criteria

Evaluation 5: the visible light transmittance was less than 10%. Evaluation 4: the visible light transmittance was less than 20% and 100 or more. Evaluation 3: the visible light transmittance was less than 30% and 20% or more. Evaluation 2: the visible light transmittance was less than 40% and 30% or more. Evaluation 1: the visible light transmittance was 40% or more.

### (Ejection Stability)

Ejection stability of each of the nonaqueous ink compositions in Examples, Comparative Examples, and Reference Examples was evaluated. Specifically, a solid and thin line were printed on a recording medium (glued polyvinyl chloride film (IMAGin JT 5829R, manufactured by MACtac)) by continuous printing at a base material surface temperature of 40°C in a high-quality printing mode (1440 × 720 dpi) in the same manner as in the above-mentioned bleeding property evaluation, presence or absence of dot omission, flight deflection, and ink scattering was visually observed, and the number of occurrences was measured (indicated as "ejection stability" in the table).

### Evaluation Criteria

Evaluation 5: the thin line was correctly reproduced.

Evaluation 4: the thin line is substantially correctly reproduced. Evaluation 3: slight deflection is observed in the thin line. Evaluation 2: a landing position was displaced, and deflection was observed. Evaluation 1: the displacement of the landing position is severe, and the thin line cannot be reproduced.

### (Cleaning Recovery Property)

Whether nozzle clogging could be eliminated by a cleaning operation of a printer when the nozzle clogging occurred in a head was evaluated. Specifically, a solid image of 1.80 m² was printed in a high-quality printing mode (1440 × 720 dpi) by using an inkjet printer having a cleaning system (trade name: VersaArt RE-640, manufactured by Rowland DG Co., Ltd.) filled with the ink compositions in Examples and Comparative Examples, and then, the inkjet printer was allowed to stand at room temperature of 25°C for 1 week, and then printed a nozzle check pattern, and performed cleaning until omission was eliminated (indicated as a "cleaning recovery property" in the table). Evaluation Criteria

Evaluation 5: no omissions. Evaluation 4: the nozzle clogging is eliminated by cleaning 1 time. Evaluation 3: the nozzle clogging is eliminated by cleaning 2 to 3 times. Evaluation 2: the nozzle clogging is eliminated by cleaning 4 to 5 times. Evaluation 1: the nozzle clogging is not eliminated even by cleaning 6 times.

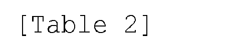

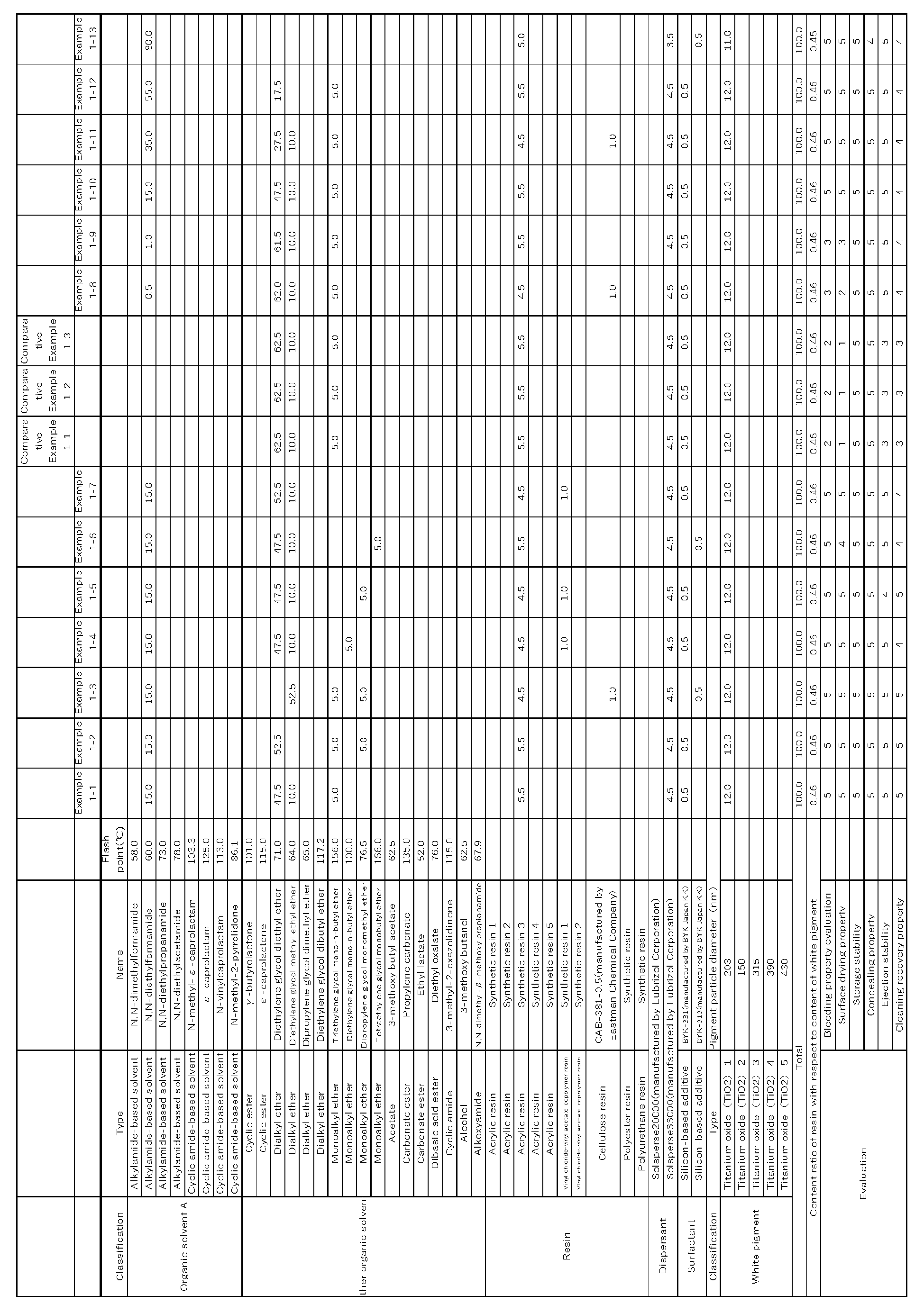

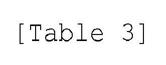

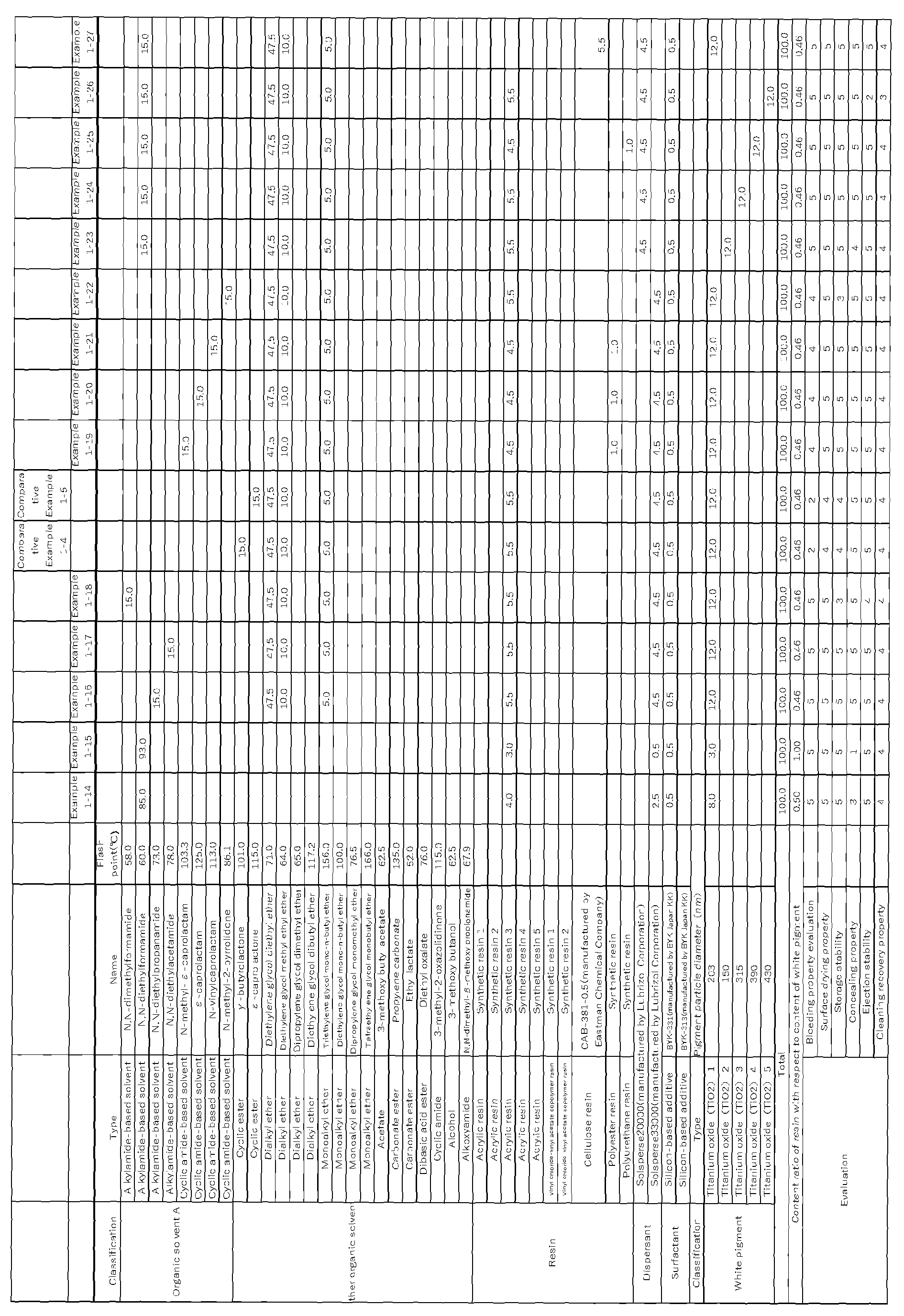

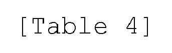

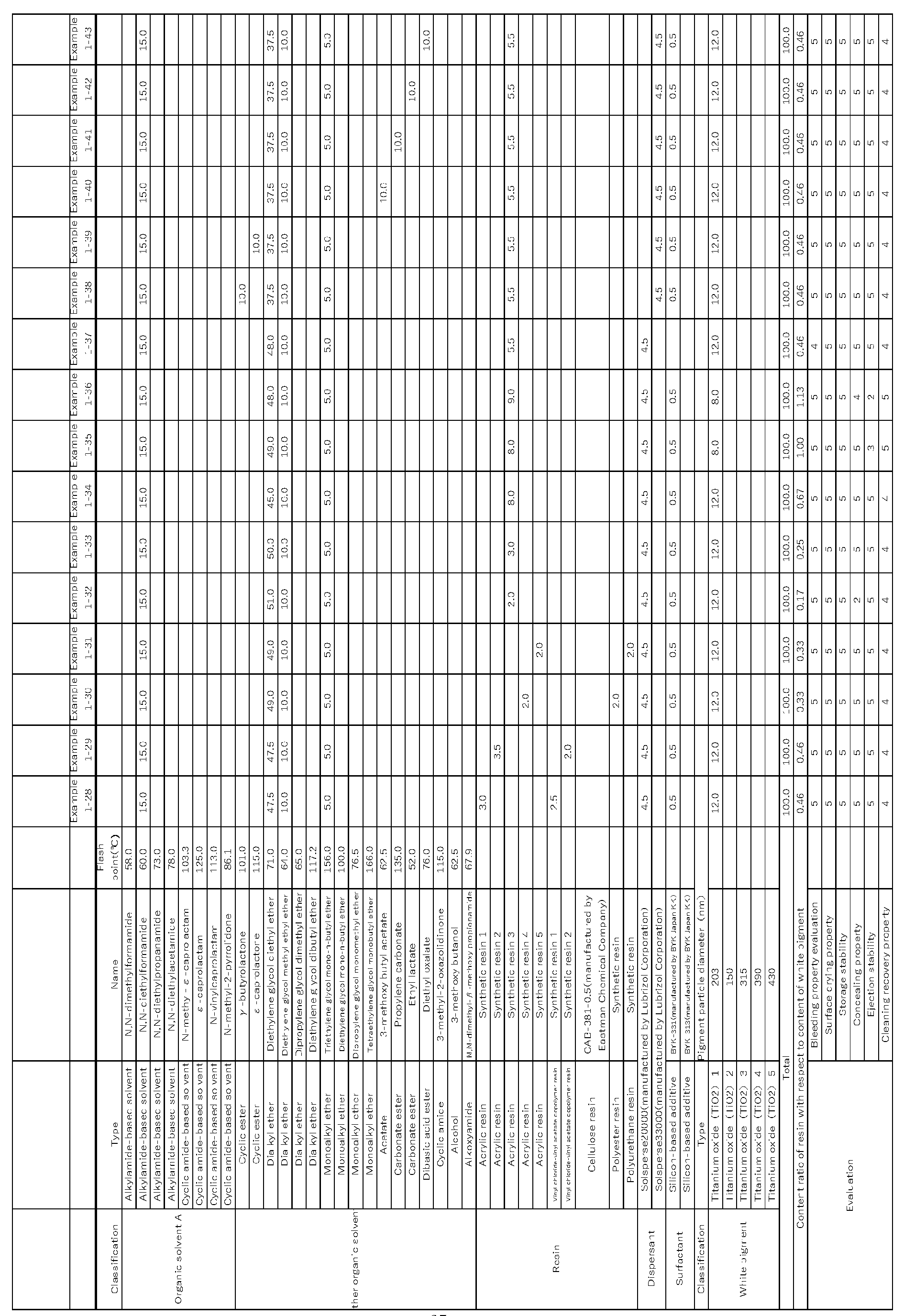

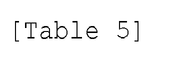

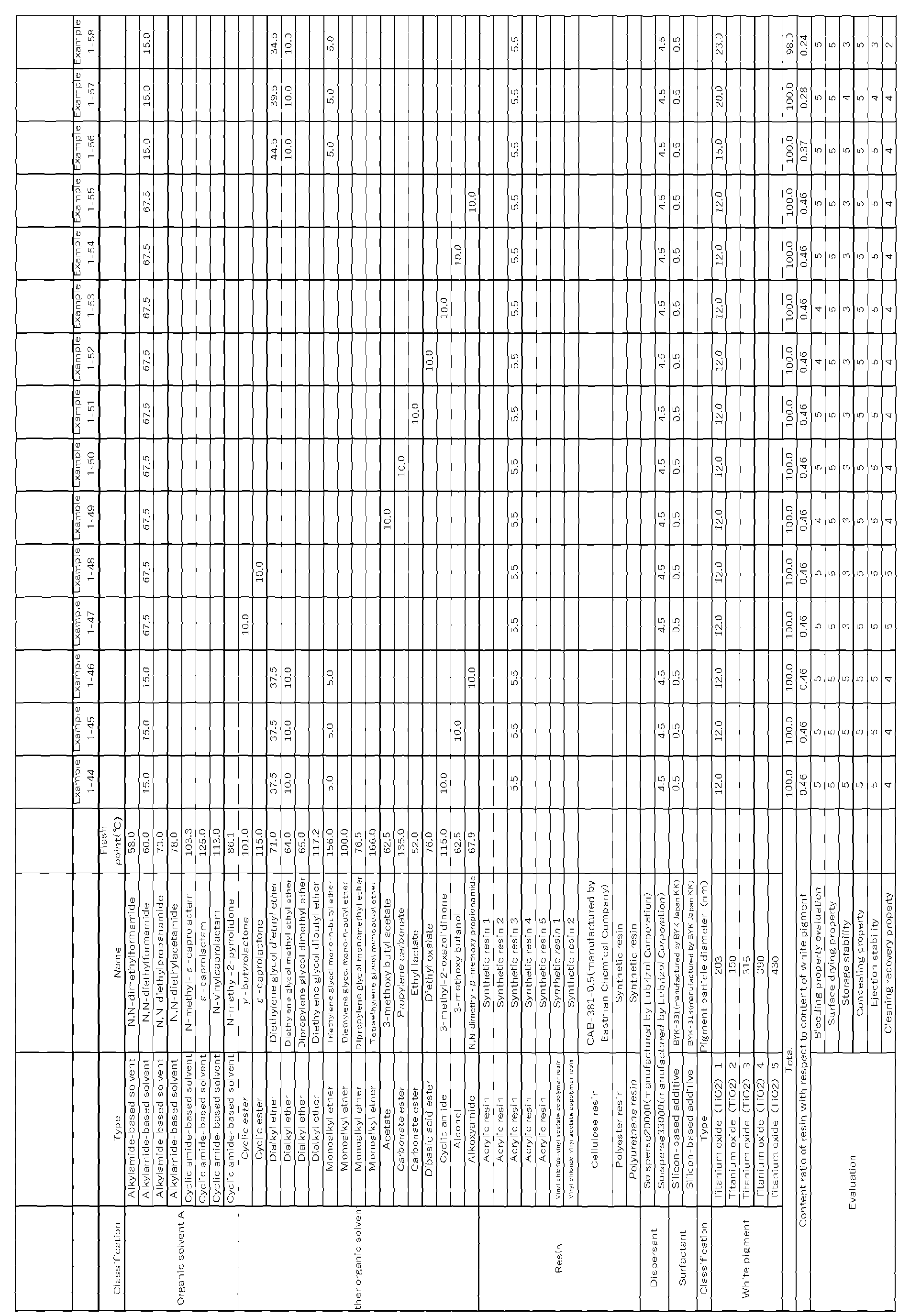

As can be seen from the tables described above, the nonaqueous ink compositions in Examples containing the organic solvent A (at least one selected from the group consisting of the alkylamide-based solvent (a1) and the cyclic amide-based solvent (a2)) can achieve both a high cleaning recovery property and a high surface drying property on a base material, even when the nonaqueous ink composition contains a white pigment.

Especially, among the nonaqueous ink compositions in Examples 1-8 to 1-13 in which the content of the organic solvent A (alkylamide-based solvent) was changed, with Examples 1-9 to 1-13 in which the content of the organic solvent A (alkylamide-based solvent) (a1) is in the range of 1 mass% or more and 90 mass% or less, particularly a high cleaning recovery property was achieved and recorded matters having an excellent surface drying property were obtained, even when compared with Example 1-8.

In addition, among the nonaqueous ink compositions in Examples 1-1 and 1-23 to 1-26 in which the volume-based cumulative 50% particle diameter (D50) of the contained white pigment was changed, with the nonaqueous ink compositions in Examples 1-1 and 1-23 to 1-25 in which the volume-based cumulative 50% particle diameter (D50) of the white pigment was 50 nm or more and 400 nm or less, particularly a high cleaning recovery property was achieved and recorded matters having an excellent surface drying property were obtained, even when compared with Example 1-26.

In addition, the nonaqueous ink compositions in Examples 1-1 and 1-16 to 1-22 in which the type of the organic solvent A was changed to the alkylamide-based solvent (a1) or the cyclic amide-based solvent (a2) all exhibited the effects of the present invention.

Further, the nonaqueous ink compositions in Examples 1-1 and 1-29 to 1-31 in which the type of the resin contained was changed all exhibited the effects of the present invention.

In addition, the nonaqueous ink compositions in Examples 1-1, 1-30 to 1-31, and 1-33 to 1-35 in which the content ratio of the resin with respect to the content of the white pigment is 0.20 to 1.00 had a better concealing property as compared with Example 1-32 and better ejection stability as compared with Example 36.

In addition, the nonaqueous ink compositions in Examples 1-38 to 1-46 in which the type of the organic solvent was changed all exhibited the effects of the present invention.

On the other hand, the nonaqueous ink compositions in Comparative Examples 1-1 to 1-5 that do not contain the organic solvent A (at least one selected from the group consisting of the alkylamide-based solvent (a1) and the cyclic amide-based solvent (a2)) had decreased surface drying property and did not exhibit the effects of the present invention.

### (Second Embodiment)

### 1. Preparation of Resin

### (1) Acrylic Resin

A mixture of 150 g of methyl methacrylate, 50 g of butyl methacrylate, and a predetermined amount of t-butylperoxy-2-ethylhexanoate (polymerization initiator) was added dropwise to 300 g of diethylene glycol diethyl ether maintained at 100°C over 1.5 hours. After completion of dropwise addition, the obtained mixture was reacted at 100°C for 2 hours and then cooled to obtain a colorless and transparent polymer solution of methyl methacrylate. Thereafter, a solvent was sufficiently distilled off from the polymer solution to obtain a polymer of methyl methacrylate. At this time, an amount of the t-butylperoxy-2-ethylhexanoate, which is a polymerization initiator, was changed to control a polymerization average molecular weight of methyl methacrylate (acrylic resin) to 10,000 to 105,000 (a mass of the polymerization initiator used at this time is described in Table 6 below, and is indicated as an "initiator amount" in Table 6.).

### (2) Vinyl Chloride-Vinyl Acetate Copolymer Resin

After nitrogen substitution, an autoclave equipped with a stirring device was charged with 100 parts by mass of deionized water, 40 parts by mass of methanol, 32 parts by mass of vinyl chloride, 5 parts by mass of vinyl acetate, 0.2 parts by mass of glycidyl methacrylate, 3.55 parts by mass of hydroxypropyl acrylate, 0.1 parts by mass of hydroxypropyl methyl cellulose (suspension agent), 0.026 parts by mass of di-2-ethylhexyl peroxydicarbonate (polymerization initiator), and a predetermined amount of di-3,5,5-trimethylhexanol peroxide (polymerization initiator), the obtained mixture was heated to 63°C while being stirred in a nitrogen gas atmosphere, and immediately after reaching 63°C, 48 parts by mass of vinyl chloride and a mixture of 0.6 parts by mass of glycidyl methacrylate and 10.65 parts by mass of hydroxypropyl acrylate were continuously injected over 6 hours and 5.4 hours to cause a copolymerization reaction. When an internal pressure of the autoclave reached 0.3 MPa, a residual pressure was released, and the resultant was cooled, and a resin slurry was taken out, filtered, and dried to obtain a vinyl chloride-based copolymer resin. At this time, the amount of di-3,5,5-trimethylhexanol peroxide, which is a polymerization initiator, was changed to control a polymerization average molecular weight of the vinyl chloride-vinyl acetate copolymer resin to 40,000 to 90,000 (a mass of the polymerization initiator used at this time is described in Table 6 below, and is indicated as an "initiator amount" in Table 6.).

**[Table 6]**

| | | Weight average molecular weight (Relative molecular mass) | Initiator amount (g) |
|---|---|---|---|
| Acrylic resin | Synthetic resin 1 | Mw=15000 | 3.30 |
| | Synthetic resin 2 | Mw=30000 | 1.20 |
| Vinyl chloride-vinyl acetate copolymer resin | Synthetic resin 1 | Mw=40000 | 0.58 |

### (3) Polyester-based Resin

A round bottom flask was charged with 104 parts by mass of terephthalic acid, 104 parts by mass of isophthalic acid, 79 parts by mass of ethylene glycol, 89 parts by mass of neopentyl glycol, and 0.1 parts by mass of tetrabutyl titanate, and a temperature of the round bottom flask was gradually increased to 240°C over 4 hours, and an esterification reaction was performed while removing a precipitate outside the system. After completion of the esterification reaction, a pressure was reduced to 10 mmHg over 30 minutes, and the temperature was increased to 250°C to perform initial polymerization. Thereafter, late polymerization was performed for 1 hour at 1 mmHg or less to obtain the polyester-based resin.

### (4) Polyurethane-based Resin

Into a round bottom flask were put 192.5 parts by mass of polycarbonate diol (PLACCEL CD-220, manufactured by Daicel Corporation), 41.6 parts by mass of isophorone diisocyanate (IPDI, manufactured by Evonik), and 100 parts by mass of N,N-diethylformamide (DEF), followed by uniformly mixing, and then a mixed liquid of 0.01 parts by mass of T100 BHJ (catalyst) and 0.09 parts by mass of N,N-diethylformamide (DEF) was put into the flask and reacted at 75°C for 3 hours to obtain a prepolymer having an isocyanate group at the end. After 250 parts by mass of N,N-diethylformamide (DEF) was added to the prepolymer and uniformly dissolved therein, a chain extender solution obtained by dissolving 12 parts by mass of 3-aminomethyl-3,5,5-trimethylcyclohexylamine (IPD: manufactured by Evonik) in 100 parts by mass of N,N-diethylformamide (DEF) was added thereto, and the mixture was further stirred at 60°C for 40 minutes. Thereafter, a reaction terminator obtained by dissolving 3.8 parts by mass of monoisopropanolamine (MIPA: Daicel Corporation) in 50 parts by mass of N,N-diethylformamide (DEF) was added, and finally, 250 parts by mass of N,N-diethylformamide (DEF) was added to obtain a polyurethane solution having a solid content of 25.0 mass%.

### 2. Production of Luster Pigment

### (1) Luster Pigment 1

A coating liquid 1 having the following composition was uniformly coated onto a PET film having a thickness of 100 um by a bar coating method and dried at 60°C for 10 minutes to form a peeling resin layer.

### Coating Liquid 1

3% of cellulose acetate butyrate (butylation ratio: 35% to 39%, manufactured by Kanto Chemical Co., Inc.)
· 97% of isopropanol

Next, a metal-containing thin film having a film thickness of 20 nm was formed on the peeling resin layer using a "VE-1010 Vacuum Deposition Apparatus" manufactured by Vacuum Device Co., Ltd. to produce a laminated body. The obtained laminated body was immersed in an organic solvent, and simultaneously subjected to peeling, pulverization, and fine dispersion treatment for 12 hours using a "VS-150 Ultrasonic Disperser" manufactured by AS ONE CORPORATION, and a luster pigment dispersion liquid containing the organic solvent and a luster pigment (metal-containing luster pigment containing aluminum) was obtained. Note that regarding the "organic solvent", a solvent whose content is the highest among solvents contained in the nonaqueous ink compositions in Examples and Comparative Examples described later was used.

The obtained luster pigment dispersion liquid was filtered through a SUS mesh filter having an opening size of 5 um to remove coarse particles. Thereafter, a concentration of the luster pigment was adjusted to prepare a luster pigment dispersion liquid 1 containing 5 mass% of a luster pigment 1. This luster pigment 1 had a volume-based cumulative 50% particle diameter (D50) of 1.5 um, a volume-based cumulative 90% particle diameter (D90) of 3.5 um, and a thickness of 20 nm.

### (2) Luster Pigment 2

A luster pigment dispersion liquid was prepared in the same manner as described above, and then 5 g of stearic acid was dissolved in 100 g of acetone, and the obtained solution was added to 200 g of the luster pigment dispersion liquid and stirred for 1 hour, and then the above-mentioned centrifugation and washing operation were performed, and acetone was replaced with an organic solvent (a solvent whose content is the highest among solvents contained in nonaqueous ink compositions in Examples and Comparative Examples described later), and a luster pigment dispersion liquid 2 containing 5 mass% of a luster pigment 2 was prepared. This luster pigment 2 had a volume-based cumulative 50% particle diameter (D50) of 1.5 um, a volume-based cumulative 90% particle diameter (D90) of 3.2 um, and a thickness of 20 nm.

### (3) Luster Pigment 3

In the preparation of the above-mentioned luster pigment 1, the film thickness of the metal-containing thin film, the refinement treatment, and the opening size of the mesh filter were changed to prepare a luster pigment dispersion liquid 3 containing 5 mass% of a luster pigment 3. This luster pigment 3 had a volume-based cumulative 50% particle diameter (D50) of 4.8 um, a volume-based cumulative 90% particle diameter (D90) of 8.2 um, and a thickness of 100 nm.

### (4) Luster Pigment 4

In the preparation of the above-mentioned luster pigment 1, the film thickness of the metal-containing thin film, the refinement treatment, and the opening size of the mesh filter were changed to prepare a luster pigment dispersion liquid 4 containing a luster pigment 4. This luster pigment 4 had a volume-based cumulative 50% particle diameter (D50) of 3.0 µm, a volume-based cumulative 90% particle diameter (D90) of 5.0 um, and a thickness of 1000 nm.

### (5) Luster Pigment 5

In the preparation of the above-mentioned luster pigment 1, aluminum was replaced with indium, the film thickness of the metal-containing thin film, and the refinement treatment and the opening size of the mesh filter were changed to prepare a luster pigment dispersion liquid 5 containing a luster pigment 5. This luster pigment 5 had a volume-based cumulative 50% particle diameter (D50) of 0.05 µm, a volume-based cumulative 90% particle diameter (D90) of 1.0 um, and a thickness of 5 nm.

### (6) Luster Pigment 6

In the preparation of the above-mentioned luster pigment 1, aluminum was replaced with nickel, and the film thickness of the metal-containing thin film, the refinement treatment, and the opening size of the mesh filter were changed to prepare a luster pigment dispersion liquid 6 containing a luster pigment 6. This luster pigment 6 had a volume-based cumulative 50% particle diameter (D50) of 3.8 µm, a volume-based cumulative 90% particle diameter (D90) of 5.0 µm, and a thickness of 5 nm.

### 3. Production of Nonaqueous Ink Composition

Nonaqueous ink compositions in Examples and Comparative Examples were produced using the respective organic solvents, resins, dispersants, and luster pigments according to proportions shown in the following tables. Specifically, the nonaqueous ink compositions in Examples and Comparative Examples were produced using the luster pigment dispersion liquids, organic solvents, resins, dispersants, and additives according to proportions shown in the following tables. The unit is mass%.

### 4. Evaluation

### (Bleeding Property)

The nonaqueous ink compositions in Examples and Comparative Examples were evaluated for a bleeding property. Specifically, the nonaqueous ink compositions in Examples and Comparative Examples were used in an inkjet method using an inkjet printer (trade name: VersaArt RE-640, manufactured by Roland DG Corporation) to print an image having 6 pt characters having a color different from that of a solid portion in the solid portion having each color on a recording medium (glued polyvinyl chloride film (IMAGin JT5829R, manufactured by MACtac) in a high-quality printing mode (1440 × 720 dpi) at a base material surface temperature of 40°C, and the obtained printed matter was dried in an oven at 60°C for 5 minutes, and then bleeding (indicated as "bleeding property" in the table) of the printed matter was visually observed with a loupe (x10). Evaluation Criteria

Evaluation 5: no ink bleeding is observed with the loupe. Evaluation 4: no ink bleeding is visually observed, and 6 pt characters are clear. Evaluation 3: slight ink bleeding is visually observed, but design is not impaired. Evaluation 2: bleeding of ink is visually observed, but 6 pt characters are identifiable. Evaluation 1: significant bleeding of ink is visually observed, and 6 pt characters cannot be visually recognized.

### (Surface Drying Property)

The nonaqueous ink compositions in Examples and Comparative Examples were evaluated for a surface drying property. Specifically, a solid image was printed on a recording medium (glued polyvinyl chloride film (IMAGin JT5829R, manufactured by MACtac)) in a high-quality printing mode (1440 × 720 dpi) in the same manner as in the above-mentioned bleeding property evaluation, and time until the solid image was dried at 40°C (indicated as a "surface drying property" in the table) was measured. Evaluation Criteria

Evaluation 5: drying is performed in less than 2 minutes.

Evaluation 4: drying is performed in 2 minutes or more and less than 4 minutes. Evaluation 3: drying is performed in 4 minutes or more and less than 6 minutes. Evaluation 2: drying is performed for 6 minutes or more and less than 8 minutes. Evaluation 1: drying is performed in 8 minutes or more.

### (Storage Stability)

Storage stability of each of the nonaqueous ink compositions in Examples and Comparative Examples was evaluated. Specifically, the nonaqueous ink composition was stored at 60°C for one month, and changes in viscosity and volume-based cumulative 50% particle diameter (D50) of a pigment before and after a test were observed, and the storage stability was evaluated according to the following criteria. Note that the viscosity of the ink was measured under a condition of 20°C using a falling ball type viscosity meter (AMVn manufactured by Anton Paar), and the volume-based cumulative 50% particle diameter (D50) of the pigment was measured under a condition of 25°C using a particle diameter distribution measurement device (NANOTRACWAVE particle size analyzer manufactured by Microtrac BEL Co., Ltd.). Note that in the following evaluation, the nonaqueous ink composition having a larger rate of change in the "viscosity" and the "volume-based cumulative 50% particle diameter (D50) of the pigment" was evaluated (indicated as "storage stability" in the table).

### Evaluation Criteria

Evaluation 5: the rates of change in both the viscosity and the volume-based cumulative 50% particle diameter (D50) of the pigment are less than 3%. Evaluation 4: either the rate of change in the viscosity or the rate of change in the volume-based cumulative 50% particle diameter (D50) of the pigment is 3% or more and less than 5%. Evaluation 3: either the rate of change in the viscosity or the rate of change in the volume-based cumulative 50% particle diameter (D50) of the pigment is 5% or more and less than 8%. Evaluation 2: either the rate of change in the viscosity or the rate of change in the volume-based cumulative 50% particle diameter (D50) of the pigment is 8% or more and less than 10%. Evaluation 1: either the rate of change in the viscosity or the rate of change in the volume-based cumulative 50% particle diameter (D50) of the pigment is 100 or more.

### (Ejection Stability)

Ejection stability of each of the nonaqueous ink compositions in Examples and Comparative Examples was evaluated. Specifically, a solid and thin line were printed on a recording medium (glued polyvinyl chloride film (IMAGin JT 5829R, manufactured by MACtac)) by continuous printing at a base material surface temperature of 40°C in a high-quality printing mode (1440 × 720 dpi) in the same manner as in the above-mentioned bleeding property evaluation, presence or absence of dot omission, flight deflection, and ink scattering was visually observed, and the number of occurrences was measured (indicated as "ejection stability" in the table).

### Evaluation Criteria

Evaluation 5: the thin line was correctly reproduced.

Evaluation 4: the thin line is substantially correctly reproduced. Evaluation 3: slight deflection is observed in the thin line. Evaluation 2: a landing position was displaced, and deflection was observed. Evaluation 1: the displacement of the landing position is severe, and the thin line cannot be reproduced.

### (Nozzle Clogging Evaluation)

The nonaqueous ink compositions in Examples, Comparative Examples, and Reference Examples were evaluated for ink nozzle clogging installed in a printer. Specifically, an inkjet printer (trade name: VersaArt RE-640, manufactured by Roland DG Co., Ltd.) was filled with the ink compositions in Examples and Comparative Examples to print a nozzle check pattern, and ejection of the inks from all nozzles was confirmed. After that, after the head was reciprocated for 30 minutes without ejecting the inks, a nozzle check pattern was printed again, and the number of non-ejecting nozzles was counted. The operating environment of the printer was a room temperature of 40°C and a relative humidity of 60%.

(This is indicated as "nozzle clogging evaluation" in the table.)

### Evaluation Criteria

Evaluation 5: the number of non-ejecting nozzles is 5 or less.

Evaluation 4: the number of non-ejecting nozzles is 6 to 10.

Evaluation 3: the number of non-ejecting nozzles is 11 to 15.

Evaluation 2: the number of non-ejecting nozzles is 16 to 20.

Evaluation 1: the number of non-ejecting nozzles is 21 or more.

### (Glossiness)

Glossiness of the printed matters obtained using the nonaqueous ink compositions in Examples and Comparative Examples was evaluated. Specifically, a printed matter was produced by ejecting these nonaqueous ink compositions onto a surface of a recording medium (glued polyvinyl chloride film (IMAGin JT5829R, manufactured by MACtac)) and drying in the same manner as in the above-mentioned bleeding property evaluation. Regarding each of the obtained printed matters, an incident light was incident on a luster layer at an incident angle of 45° from a printed surface using multi-angle color measurement system CM-M6 manufactured by KONICA MINOLTA, INC., an angle that is changed by 15° in a normal direction from a reflection angle with respect to the incident angle is used as a measurement angle, and a L* value in a L*a*b* color system at that measurement angle is measured, and glossiness (indicated as "glossiness" in the table) was evaluated according to the following evaluation criteria. Evaluation Criteria Evaluation 5: a brightness index is 120 or more. Evaluation 4: a brightness index is 110 or more and less than 120.

Evaluation 3: a brightness index is 100 or more and less than 110. Evaluation 2: a brightness index is 90 or more and less than 100. Evaluation 1: a brightness index is less than 90.

### (Cleaning Recovery Property)

Regarding the nonaqueous ink compositions in Examples and Comparative Examples, whether nozzle clogging could be eliminated by a cleaning operation of a printer when the nozzle clogging occurred in a head was evaluated. Specifically, a solid image of 1.80 m² was printed in a high-quality printing mode (1440 × 720 dpi) by using an inkjet printer having a cleaning system (trade name: VersaArt RE-640, manufactured by Rowland DG Co., Ltd.) filled with the ink compositions in Examples and Comparative Examples, and then, the printer was allowed to stand at room temperature of 25°C for 1 day, and then printed a nozzle check pattern, and performed cleaning until the omission was eliminated (indicated as a "cleaning recovery property" in the table).

### Evaluation Criteria

Evaluation 5: the nozzle clogging is eliminated by cleaning 0 to 4 times. Evaluation 4: the nozzle clogging is eliminated by cleaning 5 to 6 times. Evaluation 3: the nozzle clogging is eliminated by cleaning 7 to 8 times. Evaluation 2: the nozzle clogging is eliminated by cleaning 9 to 10 times. Evaluation 1: the nozzle clogging is not eliminated even by cleaning 10 times.

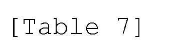

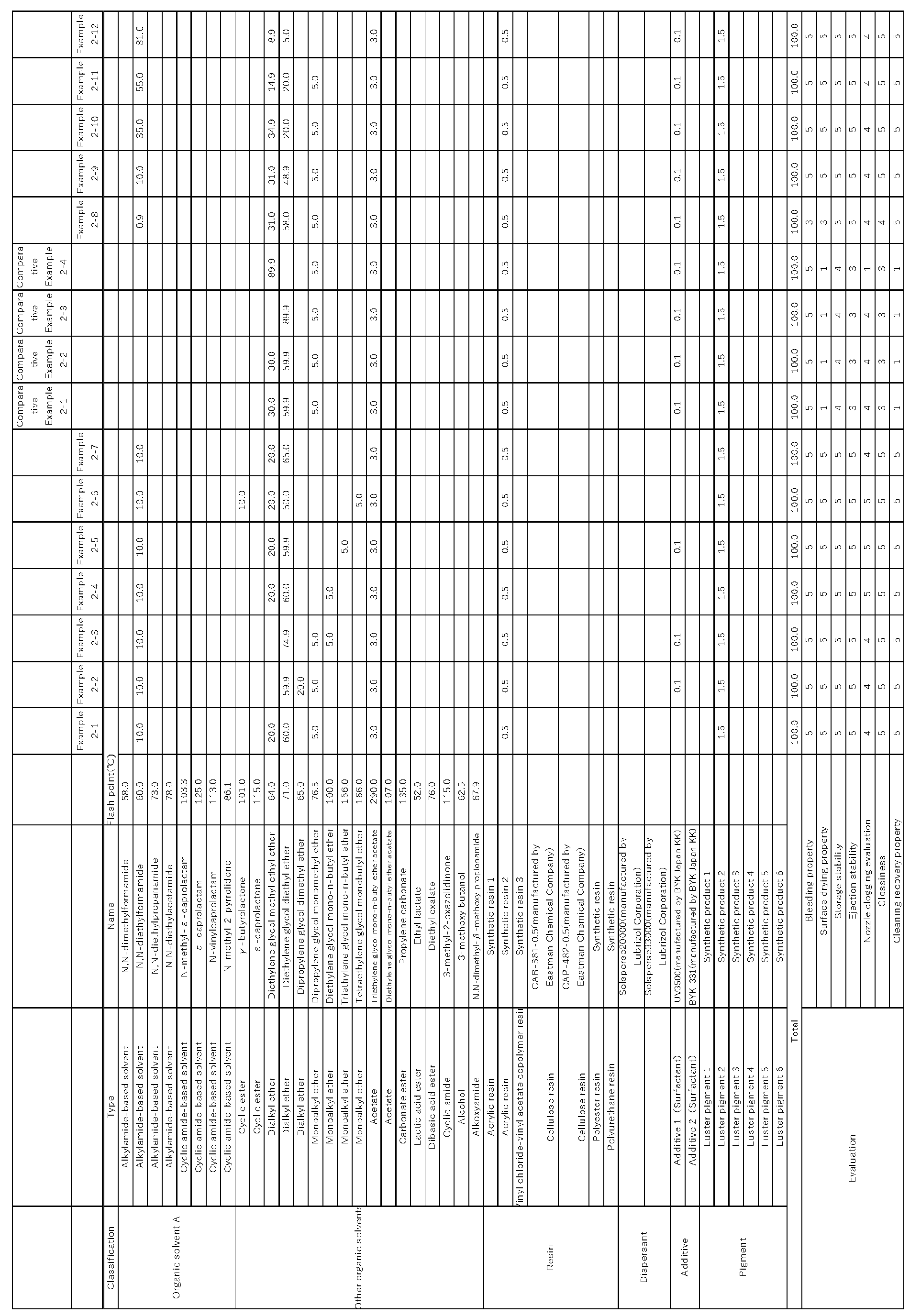

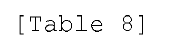

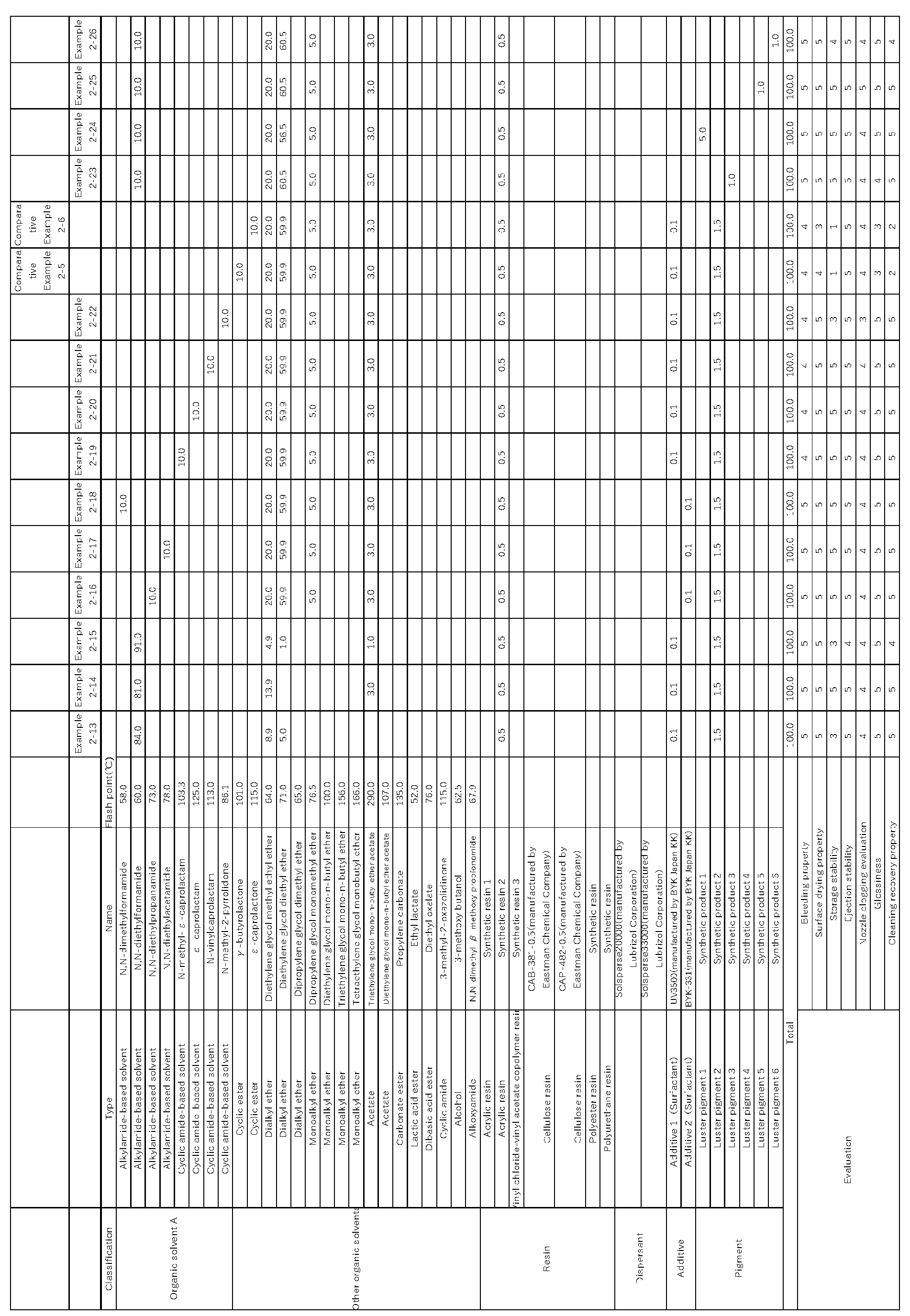

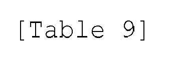

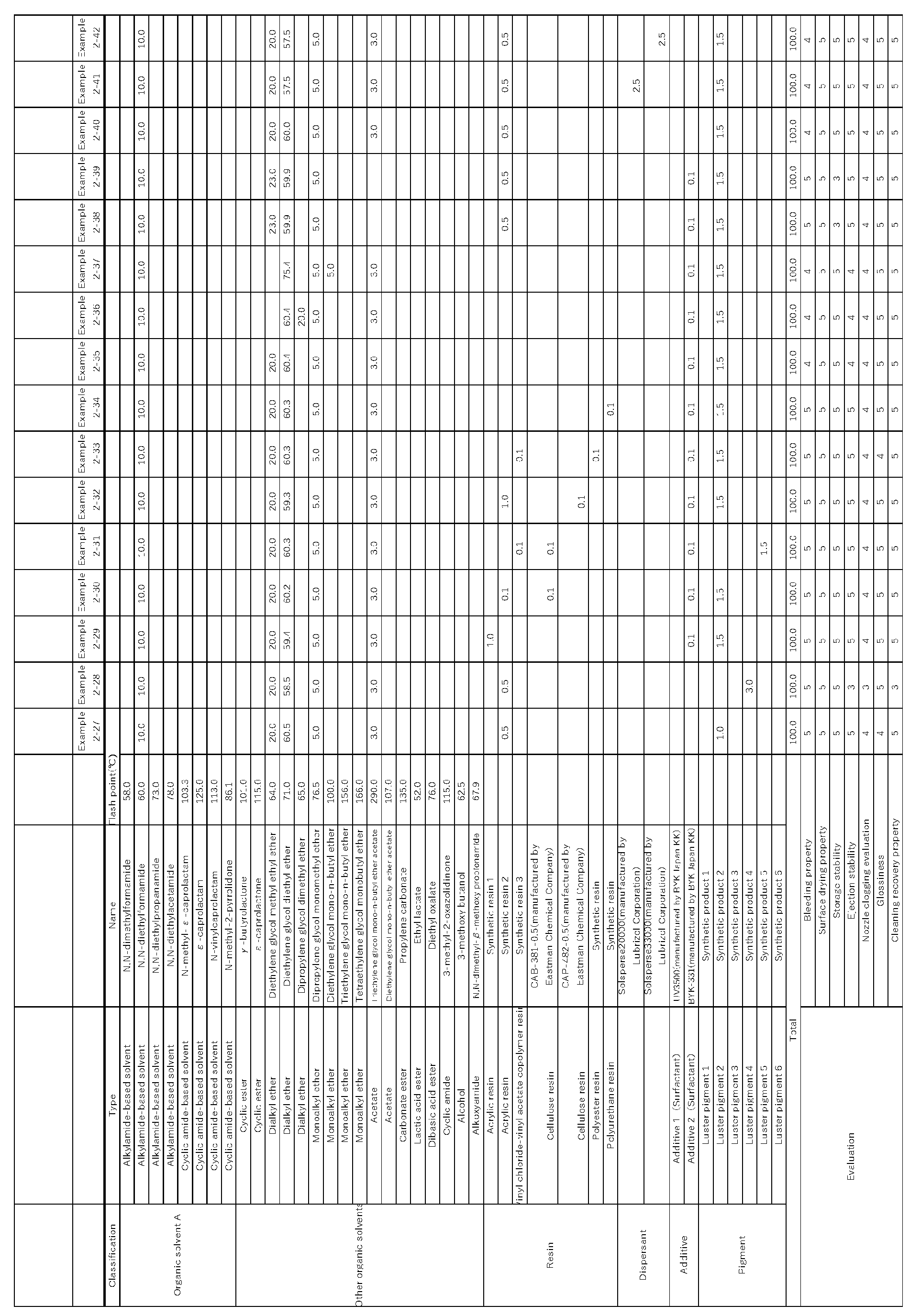

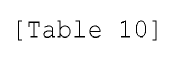

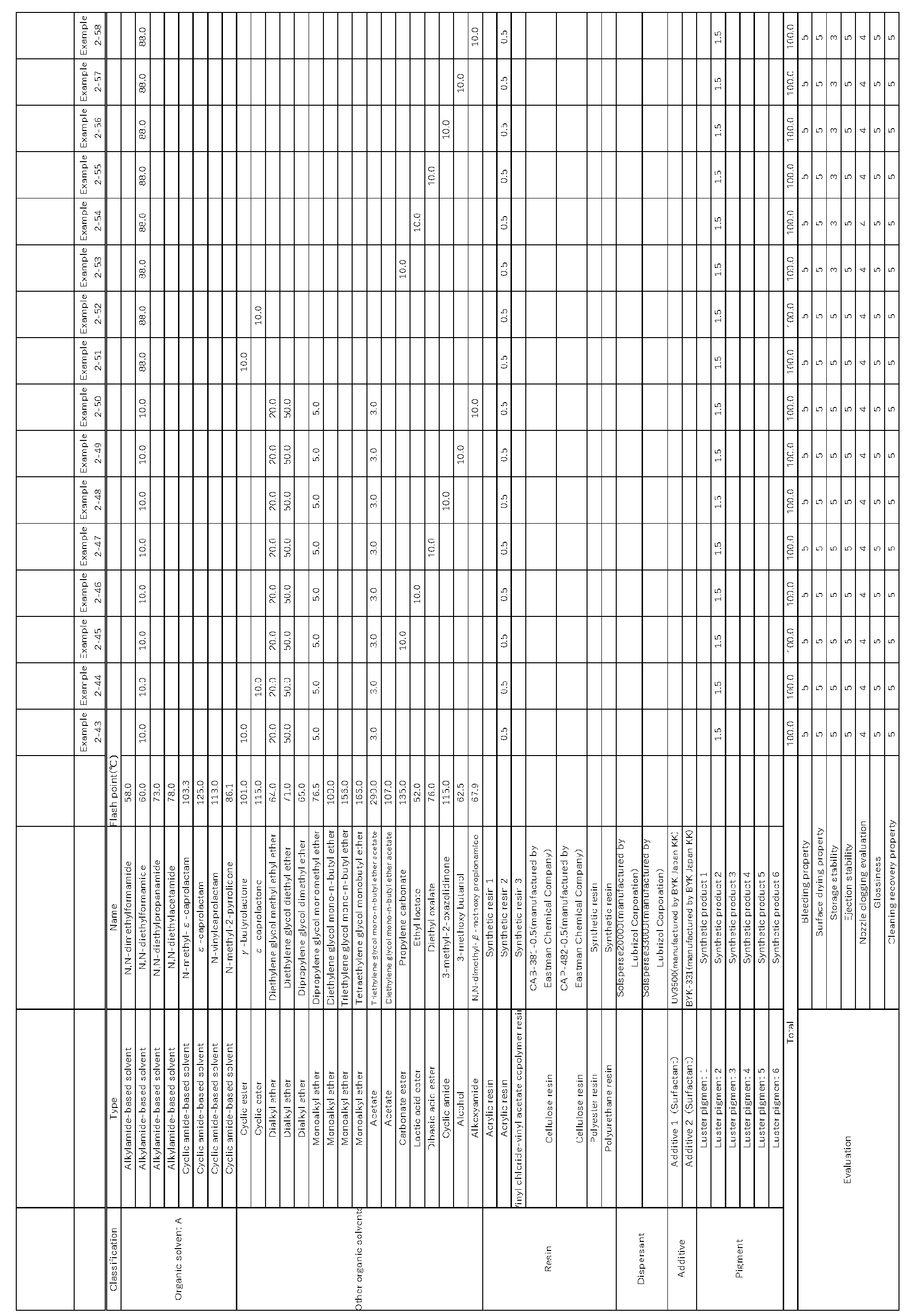

As can be seen from the tables described above, the nonaqueous ink compositions in Examples containing the organic solvent A (at least one selected from the group consisting of the alkylamide-based solvent (a1) and the cyclic amide-based solvent (a2)) can achieve both a high cleaning recovery property and a high surface drying property on a base material, even when the nonaqueous ink composition contains a luster pigment.

It also can be seen from the tables described above that even when the luster layer is formed using the nonaqueous ink compositions in Examples containing the organic solvent A (at least one selected from the group consisting of the alkylamide-based solvent (a1) and the cyclic amide-based solvent (a2)), the glossiness of the luster layer can be improved and suitable metallic glossiness can be imparted.

Especially, in the nonaqueous ink compositions in Examples 2-8 to 2-13 in which the content of the organic solvent A (alkylamide-based solvent) was changed, with Examples 2-9 to 2-13 in which the content of organic solvent A (alkylamide-based solvent) (a1) is in the range of 1 mass% or more and 90 mass% or less, particularly a high cleaning recovery property was achieved and recorded matters having an excellent surface drying property were obtained, even when compared with Example 2-8.

In addition, the nonaqueous ink compositions in Examples 2-1 and 2-16 to 2-22 in which the type of the organic solvent A was changed to the alkylamide-based solvent (a1) or the cyclic amide-based solvent (a2) all exhibited the effects of the present invention.

In addition, in the nonaqueous ink compositions in Examples 2-1 and 2-23 to 2-27 in which the volume-based cumulative 50% particle diameter (D50) of the contained luster pigment was changed, particularly a high cleaning recovery property was achieved and recorded matters having an excellent surface drying property were obtained, even when compared with Example 2-28.

Further, the nonaqueous ink compositions in Examples 2-30 to 2-34 in which the type of the resin contained was changed and the nonaqueous ink compositions in Examples 2-35 to 2-37 which do not contain any resin all exhibited the effects of the present invention.

In addition, the nonaqueous ink compositions in Examples 2-45 to 2-50 and 2-53 to 2-58 in which the type of the organic solvent was changed all exhibited the effects of the present invention. In addition, since storage stability of each of the nonaqueous ink compositions in Examples 2-53 to 2-58, which do not particularly contain any acetate-based solvent, was slightly decreased, it was confirmed that a nonaqueous ink composition containing an acetate-based solvent can improve the storage stability of a nonaqueous ink composition containing a luster pigment.

On the other hand, the nonaqueous ink compositions in Comparative Examples 2-1 to 2-6 that do not contain the organic solvent A (at least one selected from the group consisting of the alkylamide-based solvent (a1) and the cyclic amide-based solvent (a2)) had decreased surface drying property and did not exhibit the effects of the present invention.

## Claims

1. A nonaqueous ink composition to be ejected by an inkjet method, the nonaqueous ink composition comprising: a colorant; and an organic solvent,
the colorant containing a white pigment,
the organic solvent containing the following organic solvent A:
organic solvent A: at least one selected from the group consisting of an alkylamide-based solvent (a1) and a cyclic amide-based solvent (a2).

2. The nonaqueous ink composition according to claim 1, wherein the white pigment contains an inorganic oxide.

3. The nonaqueous ink composition according to claim 2, wherein the white pigment contains titanium oxide.

4. The nonaqueous ink composition according to any one of claims 1 to 3, wherein a content of the white pigment is 8 mass% or more and 20 mass% or less in a total amount of the nonaqueous ink composition.

5. The nonaqueous ink composition according to any one of claims 1 to 4, further comprising: a surfactant, wherein the surfactant includes a surfactant having a siloxane skeleton, and
a content of the surfactant having a siloxane skeleton is 0.01 mass% or more and 1.0 mass% or less.

6. The nonaqueous ink composition according to any one of claims 1 to 5, which is used to form an under layer or an upper layer made of at least one selected from the group consisting of a black ink composition, a colored ink composition, a luster ink composition, and a clear ink composition.

7. A nonaqueous ink composition to be ejected by an inkjet method, the nonaqueous ink composition comprising: a luster pigment; and an organic solvent,
the organic solvent containing the following organic solvent A:
organic solvent A: at least one selected from the group consisting of an alkylamide-based solvent (a1) and a cyclic amide-based solvent (a2).

8. The nonaqueous ink composition according to claim 7, wherein the luster pigment includes a metal-containing luster pigment.

9. The nonaqueous ink composition according to claim 8, wherein the metal-containing luster pigment contains at least one selected from the group consisting of aluminum, an aluminum alloy, indium, an indium alloy, nickel, and a nickel alloy.

10. The nonaqueous ink composition according to claim 9, wherein the metal-containing luster pigment contains at least aluminum or the aluminum alloy.

11. The nonaqueous ink composition according to any one of claims 8 to 10, wherein a volume-based cumulative 50% particle diameter (D50) of the metal-containing luster pigment is 0.01 um or more and 5.0 µm or less, and
a volume-based cumulative 90% particle diameter (D90) of the metal-containing luster pigment is 10.0 um or less.

12. The nonaqueous ink composition according to any one of claims 8 to 11, wherein the metal-containing luster pigment is a particle having a flat surface.

13. The nonaqueous ink composition according to claim 12, wherein the metal-containing luster pigment includes a metal-containing luster pigment having a flat plate shape or a scale shape.

14. The nonaqueous ink composition according to claim 13, wherein a thickness of the metal-containing luster pigment having a flat plate shape or a scale shape is in a range of 5 nm or more and 5.0 µm or less.

15. The nonaqueous ink composition according to any one of claims 7 to 14, wherein the organic solvent further contains an acetate-based solvent represented by the following formula (2-3) : 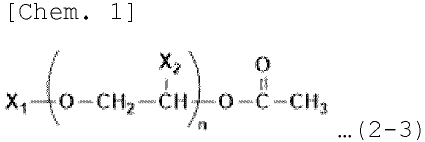
wherein X₁ is an alkyl group, X₂ is hydrogen or an alkyl group, and
n represents an integer of 1 or more and 4 or less.

16. The nonaqueous ink composition according to any one of claims 7 to 15, which is used to form an under layer or an upper layer made of at least one selected from the group consisting of a black ink composition, a colored ink composition, a luster ink composition, and a clear ink composition.

17. The nonaqueous ink composition according to any one of claims 1 to 16, wherein a content of the organic solvent A is 1.0 mass% or more and 90.0 mass% or less in a total amount of the nonaqueous ink composition.

18. The nonaqueous ink composition according to any one of claims 1 to 17, wherein the organic solvent A contains the alkylamide-based solvent (a1).

19. The nonaqueous ink composition according to claim 18, wherein the alkylamide-based solvent is represented by the following general formula (1): 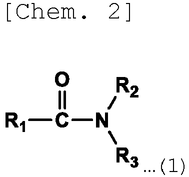 wherein R₁ represents hydrogen or an alkyl group having 1 or more and 4 or less carbon atoms, and R2 and R₃ each independently represent hydrogen or an alkyl group having 1 or more and 4 or less carbon atoms.

20. The nonaqueous ink composition according to claim 19, wherein the alkylamide-based solvent includes at least one selected from the group consisting of N,N-diethylformamide, N,N-diethylpropanamide, and N,N-diethylacetamide.

21. The nonaqueous ink composition according to any one of claims 1 to 17, wherein the organic solvent A contains the cyclic amide-based solvent (a2).

22. The nonaqueous ink composition according to claim 21, wherein the cyclic amide-based solvent is represented by the following general formula (2): 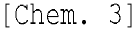 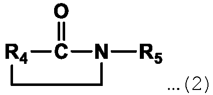 wherein R₄ represents an alkylene group having 3 or more and 5 or less carbon atoms, and R₅ represents hydrogen or an alkyl group or an unsaturated hydrocarbon group having 1 or more and 4 or less carbon atoms.

23. The nonaqueous ink composition according to claim 22, wherein the cyclic amide-based solvent includes at least one selected from the group consisting of ε-caprolactam, N-methyl-ε-caprolactam, and N-vinylcaprolactam.

24. The nonaqueous ink composition according to any one of claims 1 to 23, wherein the organic solvent further contains at least one selected from the group consisting of a glycol ether-based solvent, an acetate-based solvent, a cyclic ester, a carbonate ester, a dibasic acid ester, a lactic acid ester, an amide, and an alcohol.

25. The nonaqueous ink composition according to any one of claims 1 to 24, wherein the organic solvent contains the glycol ether-based solvent.

26. The nonaqueous ink composition according to claim 25, wherein the glycol ether-based solvent includes glycol ether dialkyl.

27. The nonaqueous ink composition according to claim 25 or 26, wherein the glycol ether-based solvent includes glycol ether monoalkyl.

28. The nonaqueous ink composition according to any one of claims 25 to 27, wherein the glycol ether-based solvent includes at least two solvents having different flash points.

29. The nonaqueous ink composition according to any one of claims 1 to 28, further comprising: a resin.

30. The nonaqueous ink composition according to claim 29, wherein a content of the resin is within the range of 0.1 mass% or more and 10.0 mass% or less in the total amount of the nonaqueous ink composition.

31. The nonaqueous ink composition according to claim 29 or 30, wherein the resin includes at least one or more selected from the group consisting of an acrylic resin, a vinyl chloride-based resin, a polyurethane-based resin, a polyester-based resin, and a cellulose-based resin.

32. The nonaqueous ink composition according to any one of claims 29 to 31, wherein the nonaqueous ink composition is a white ink composition containing a white pigment, and
a content ratio of the resin with respect to a content of the white pigment is 0.20 or more and 1.00 or less.

33. An ink set comprising: the nonaqueous ink composition according to any one of claims 1 to 32.

34. An ink set comprising: the nonaqueous ink composition according to any one of claims 1 to 32,
the nonaqueous ink composition being a white ink composition containing a white pigment,
the nonaqueous ink composition and at least one or more selected from the group consisting of a black ink composition, a colored ink composition, a luster ink composition, and a clear ink composition are simultaneously ejected onto a surface of a base material by an inkjet method.

35. An ink set comprising the nonaqueous ink composition according to any one of claims 1 to 32,
the nonaqueous ink composition being a luster ink composition containing a luster pigment,
the nonaqueous ink composition and at least one or more selected from the group consisting of a black ink composition, a colored ink composition, a white ink composition, and a clear ink composition are simultaneously ejected onto a surface of a base material by an inkjet method.

36. A recorded matter comprising: a recording layer made of the nonaqueous ink composition according to any one of claims 1 to 32 formed on a surface of a base material.

37. A recording method comprising: ejecting the nonaqueous ink composition according to any one of claims 1 to 32 onto a surface of a base material by an inkjet method.

38. A method for producing a recorded matter, the method comprising: ejecting the nonaqueous ink composition according to any one of claims 1 to 32 onto a surface of a base material by an inkjet method.
